Europäisches Patentamt

European Patent Office

Office européen des brevets

(11) Veröffentlichungsnummer: **0 283 657 B1**

(12) **EUROPÄISCHE PATENTSCHRIFT**

(45) Veröffentlichungstag der Patentschrift: **23.12.92**

(21) Anmeldenummer: **88100960.9**

(22) Anmeldetag: **22.01.88**

(51) Int. Cl.⁵: **F15B 15/02**, G01M 7/00, G01M 17/00, B06B 1/18

(54) **Mehraxiales Antriebselement.**

(30) Priorität: **20.03.87 DE 3709141**

(43) Veröffentlichungstag der Anmeldung:
**28.09.88 Patentblatt 88/39**

(45) Bekanntmachung des Hinweises auf die
Patenterteilung:
**23.12.92 Patentblatt 92/52**

(84) Benannte Vertragsstaaten:
**AT BE CH DE ES FR GB GR IT LI LU NL SE**

(56) Entgegenhaltungen:
**EP-A- 0 094 570**
**DE-A- 3 513 616**
**DE-C- 3 341 721**
**US-A- 4 516 476**

**SONDERDRUCK P 5902 DER FA. SCHENK AG
"ATZ" Automobil- technische Zeitschrift 74
(1972) 4 F.KLINGER; R.ROSS "Mehraxiale servohydraulische PrUfstUnde fUr
Schwingfestigkeitsunter- suchungen an
Kraftfahr- zeugachsen." Seiten 134-145**

(73) Patentinhaber: **FRAUNHOFER-GESELLSCHAFT
ZUR FÖRDERUNG DER ANGEWANDTEN FOR-
SCHUNG E.V.**
**Leonrodstrasse 54**
**W-8000 München 19(DE)**

(72) Erfinder: **Merten, Werner, Dipl.-Ing.**
**Berliner Strasse 15**
**W-6080 Gross-Gerau(DE)**

(74) Vertreter: **Kraus, Walter, Dr. et al**
**Patentanwälte Kraus, Weisert & Partner**
**Thomas-Wimmer-Ring 15**
**W-8000 München 22(DE)**

## Beschreibung

Die Erfindung betrifft ein mehraxiales Antriebselement, das wenigstens zwei Antriebseinheiten zum Erzeugen eines axialen Verschiebungsantriebs umfaßt, von denen die eine Antriebseinheit auf mindestens einem durch die andere Antriebseinheit verschiebbaren Bauteil derart angebracht ist, daß die axialen Verschiebungsrichtungen der Antriebseinheiten quer, insbesondere senkrecht, zueinander verlaufen, wobei wenigstens eine dieser Antriebseinheiten eine pneumatische oder hydraulische Kolben-Zylinder-Einheit umfaßt, in der ein Antriebskolben in einem Zylinder hin- und herverschiebbar angeordnet ist und zusammen mit letzterem einen ersten und zweiten Druckströmungsmittelraum begrenzt, in die und aus denen ein pneumatisches oder hydraulisches Druckströmungsmittel zum Verschieben des Antriebskolbens zu- und abführbar ist.

Von den vielen Anwendungen mehraxialer Antriebseinrichtungen sei hier ihre Verwendung in mehraxialen servohydraulischen Prüfständen für Schwingfestigkeitsuntersuchungen an Kraftfahrzeugachsen, wie sie beispielsweise in der Schenck-Druckschrift P 5902 der Fa. Schenck AG, Darmstadt beschrieben sind, als Anwendungsbeispiel genannt. In einer solchen Einrichtung zur betriebsähnlichen Prüfung von Fahrzeugachsen ist es erforderlich, auf eine Belastungseinrichtung, an der eine Nachbildung eines Fahrzeugrades befestigt ist, Kräfte einzuleiten, und zwar müssen voneinander unabhängige und veränderliche senkrechte Kräfte und horizontale Seitenkräfte sowie Bremskräfte über die Belastungseinrichtung eingeleitet werden. Diese Belastungseinrichtung umfaßt als Antriebseinheiten, welche die vorstehend erwähnten Kräfte einleiten, servohydraulische Belastungszylinder, von denen der eine die senkrechte Kraft und der andere die horizontale Seitenkraft erzeugt. Da nun diese servohydraulischen Belastungszylinder auf die gleiche Belastungseinrichtung in zwei zueinander senkrechten Richtungen, nämlich in Vertikal- und in Horizontalrichtung, einwirken, ergeben sich aufgrund dieser geometrischen Zwangsanordnung dieses mehraxialen Aufbaus zeitliche Phasenverschiebungen zwischen dem servohydraulischen Belastungszylinder, welcher die Vertikalkraft aufbringt, und dem servohydraulischen Belastungszylinder, welcher die Horizontalseitenkraft aufbringt. Wenn darüber hinaus auch noch servohydraulische Belastungszylinder für das Aufbringen von Längskräften und Bremskräften vorhanden sind, dann ergeben sich noch entsprechende weitere zeitliche Phasenverschiebungen. Aufgrund dieser Verhältnisse ist ein Geometrieausgleich zwischen den Belastungszylindern erforderlich, der im allgemeinen die Verwendung von Großrechneranlagen mit komplizierter Software erfordert, da die Durchführung des Geometrieausgleichs, der durch die Kreisbogenbewegung des Endes der Kolbenstange des einen Belastungszylinders, welche durch die dazu senkrechte Bewegung der Kolbenstange des anderen Belastungszylinders verursacht wird, bedingt ist, sehr kompliziert und schwierig ist, so daß man nicht ohne teure Prozeßrechenanlagen auskommt.

Man kann zwar, wie beispielsweise in der DE-C-3 341 721 bei einer Prüfvorrichtung für Fahrzeugräder beschrieben und veranschaulicht ist, den einen Belastungszylinder auf einem Gestell anbringen, das von dem anderen Belastungszylinder bewegt wird, der eine zur Kraftrichtung des ersteren Belastungszylinders senkrechte Kraftrichtung hat. Dazu sind aber sperrige und schwere Aufbauten mit entsprechenden Gegengewichten notwendig.

Eine weitere Schwierigkeit bei mehraxialen Antriebseinrichtungen, welche dort angewandt werden, wo hohe Kräfte er zeugt werden, wie beispielsweise in den vorstehend erwähnten Einrichtungen zum Prüfen von Fahrzeugrädern, ist das durch die Mehrachsigkeit bedingte Auftreten von hohen Seiten- bzw. Querkräften an den Belastungszylindern, d.h. von Kräften, die quer, insbesondere senkrecht, zur Verschiebungsrichtung des jeweiligen Belastungszylinders wirken. Solche Seiten- bzw. Querkräfte sind insbesondere insofern problematisch, als die zur Zeit üblichen Belastungszylinder, die hier auch als pneumatische oder hydraulische Kolben-Zylinder-Einheiten bezeichnet werden, nach dem Stande der Technik alle so gebaut sind, daß der darin befindliche Kolben, der hier als Antriebskolben bezeichnet wird, nur in begrenztem Maße mit Seitenkräften beaufschlagbar ist. Eine Erhöhung der maximal zulässigen Seitenkräfte eines solchen Belastungszylinders kann nach dem Stande der Technik nur dadurch erreicht werden, daß die Verschiebelagerung des Antriebskolbens entsprechend verändert wird, d.h. daß der Kolben in seiner Verschiebungsrichtung verlängert und/oder die Lagerung für die Kolbenstange in der Verschiebungsrichtung länger gemacht wird oder der Durchmesser der Kolbenstange vergrößert wird, um die Lagerfläche des Kolbens und der Kolbenstange zu vergrößern, damit sich die Seitenkräfte auf eine größere Lagerfläche verteilen können und damit die Aufnahme von größeren maximalen Seitenkräften ermöglicht wird. Eine weitere Schwierigkeit in diesem Zusammenhang besteht darin, daß die Antriebskraft für den Antriebskolben, d.h. die vom Kolben in der Verschiebungsrichtung desselben erzeugte Längskraft, und die maximal zulässige Seitenkraft nie unabhängig voneinander betrachtet werden können, sondern daß vielmehr zu jeder Antriebskraft nur ein vorbestimmter maximaler Seitenkraftwert zulässig ist. Schließlich haben die Belastungseinheiten nach dem Stande der Technik den weiteren Nachteil, daß die Entfernung von dem Servoventil, mit welchem die Zu- und Abführung des Druckströmungsmittels zu den beiden Druckströmungsmittelräumen, d.h. zu den Zylinderkammern, gesteuert wird, immer hubabhängig ist. Je größer nämlich der Nennhub des Antriebskolbens des Belastungszylinders ist, um so größer ist die Entfernung zwischen dem Servoventil und der jeweiligen Zylinderkammer. Infolge der sich hierdurch ergebenden langen Zuleitungswege am Zylinder muß das steuernde Servoventil vergrößert und damit auch die notwendige Leistung des Druckerzeugungsaggregats wegen der sich ergebenden höheren Druckverluste erhöht werden.

Aus der DE-A-3 513 616 ist eine Längszylindereinheit bekannt, die eine pneumatische oder hydraulische Kolben-Zylinder-Einheit umfaßt, in der ein Antriebskolben in einem Zylinder hin-und herverschiebbar angeordnet ist und zusammen mit letzterem einen ersten und zweiten Druckströmungsmittelraum begrenzt, in die und aus denen ein pneumatisches oder hydraulisches Druckströmungsmittel zum verschieben des Antriebskolbens zu-und abführbar ist, wobei ein Lastkolben, welcher quer zur Verschiebungsrichtung des Antriebskolbens von außen her erwirkende Querkräfte aufnimmt, in einer Längsführung parallel zum Antriebskolben verschiebbar angeordnet ist. Hierbei ist der Antriebskolben durch je eine Endplatte starr an den beiden Längsenden des Lastkolbens befestigt, und außerdem ist parallel zu dem Antriebskolben und dem Lastkolben eine Schlittenführung vorgesehen, welche über die beiden Endplatten sowohl mit dem Antriebskolben als auch mit dem Lastkolben starr verbunden ist und durch die eine Schwenkbewegung des Gehäuses der Längszylindereinheit um den Lastkolben verhindert werden soll, während die eigentliche Führung durch den Lastkolben und die Lager, in denen dieser gelagert wird, erfolgt. Trotz dieser baulich ziemlich aufwendigen Führung wird der Antriebskolben aber nur relativ beschränkt von Querkräften entlastet. Denn tatsächlich werden die Querkräfte, die von außen auf die im wesentlichen aus dem Antriebskolben und seinen Kolbenstangen, dem Lastkolben, der Schlittenführung und den Endplatten bestehende Längszylindereinheit einwirken, durch die starre Verbindung zwischen diesen genannten Bauteilen nach wie vor auf den Antriebskolben übertragen. Es ist lediglich so, daß diese Querkräfte durch die Führung des Lastkolbens und die Schlittenführung daran gehindert werden, den Antriebskolben über ein vorbestimmtes Maß hinaus quer zu seinem Zylinder zu verlagern. Wenn aber die Querkräfte so hoch werden, daß sie eine - möglicherweise nur elastische - relativ hohe Deformation der Führungen bewirken, dann kann es schließlich zu einem Verklemmen des Antriebskolbens kommen. Derartige hohe Querkräfte treten beispielsweise bei den eingangs genannten mehraxialen servohydraulischen Prüfständen für Untersuchungen an Kraftfahrzeugachsen o. dgl. auf.

In diesen Fällen führt das der Vorrichtung nach der DE-A-3 513 616 zugrundeliegende Prinzip, die Wirkung der Querkräfte auf den Antriebskolben dadurch zu begrenzen, daß der starr mit dem Antriebskolben verbundene Lastkolben mit entsprechend enger Toleranz geführt wird, dazu, daß die Längszylindereinheit durch die Einwirkung von hohen Seiten- bzw. Querkräften ganz oder teilweise funktionsunfähig werden kann.

Aufgabe der Erfindung ist es demgegenüber insbesondere, ein mehraxiales Antriebselement zur Verfügung zu stellen, das einen kompakten und relativ leichten Aufbau hat und trotzdem keinen Geometrieausgleich erfordert sowie hohe Seiten- bzw. Querkräfte aufnehmen kann.

Diese Aufgabe wird mit einem mehraxialen Antriebselement der eingangs genannten Art erfindungsgemäß dadurch gelöst, daß die Kolben-Zylinder-Einheit der wenigstens einen Antriebseinheit eine Längszylindereinheit oder mehrere, parallel zueinander angeordnete Längszylindereinheiten umfaßt, wobei die Längszylindereinheit einen quer zur Verschiebungsrichtung des Antriebskolbens von außen her einwirkende Querkräfte aufnehmenden Lastkolben hat, der in seiner Längsrichtung parallel zum Antriebskolben verschiebbar angeordnet und durch eine den Antriebskolben von den Querkräften entkuppelnde, jedoch in der Verschiebungsrichtung des Antriebskolbens wirkende Druck- und/oder Zuglängskräfte auf den Lastkolben übertragende Kupplung mit dem Antriebskolben verbunden ist.

Obwohl die eine Antriebseinheit auf einem durch die andere Antriebseinheit verschiebbaren Bauteil angebracht ist, ist im Gegensatz zum Stande der Technik bei dem erfindungsgemäßen mehraxialen Antriebselement kein sperriger und schwerer Aufbau notwendig, weil die Seiten- bzw. Querkräfte ausschließlich oder nahezu ausschließlich von dem Lastkolben aufgenommen werden, so daß der Antriebskolben und dessen Lagerung praktisch nur noch die Längskräfte aufzunehmen brauchen. Damit können die Länge des Antriebskolbens und die Länge der Lagerung der Kolbenstange desselben unabhängig von den maximal vorgesehenen Seitenkräften relativ klein gehalten werden, weil sie praktisch keinerlei Seitenkräfte mehr aufnehmen müssen, während hingegen die gesamte Länge der Längsführung des Lastkolbens jederzeit für die Aufnahme der Seitenkräfte zur Verfügung steht, so daß sich trotz Aufnahme sehr hoher Seitenkräfte ein baulich sehr gedrängter Aufbau ergibt.

Weiter können schwere Gegengewichte entfallen, wenn das erwähnte mindestens eine Bauteil, auf dem die eine Antriebseinheit angebracht ist, an dem Lastkolben befestigt und die genannte eine Antriebseinheit derart an diesem Bauteil angebracht ist, daß sich ihr Massenschwerpunkt in ihrer mittleren Verschiebungsstellung senkrecht oder im wesentlichen senkrecht über dem Massenschwerpunkt der anderen axialen Antriebseinheit in deren mittlerer Verschiebungsstellung befindet. Es kann auch je ein Bauteil an jedem Ende des Lastkolbens befestigt und die eine Antriebseinheit an diesen beiden Bauteilen oder an einem diese beiden Bauteile verbindenden Bauteil angebracht sein.

Eine bevorzugte Weiterbildung des mehraxialen Antriebselements nach der Erfindung zeichnet sich dadurch aus, daß jede der beiden Antriebseinheiten eine Längszylindereinheit oder mehrere, parallel zueinander angeordnete Längszylindereinheiten umfaßt, wobei die Längszylindereinheiten einen quer zur Verschiebungsrichtung des Antriebskolbens von außen her einwirkende Querkräfte aufnehmenden Lastkolben besitzt, der in einer Längsführung parallel zum Antriebskolben verschiebbar angeordnet und durch eine den Antriebskolben von den Querkräften entkuppelnde, jedoch in der Verschiebungsrichtung des Antriebskolbens wirkende Druck- und/oder Zuglängskräfte auf den Lastkolben übertragende Kupplung mit dem Antriebskolben verbunden ist.

Auch hier können schwere Gegengewichte entfallen, wenn die Längszylindereinheit oder -einheiten der einen axialen Antriebseinheit, die auf mindestens einem durch die andere axiale Antriebseinheit verschiebbaren Bauteil angebracht ist bzw. sind, derart auf letzterer befestigt ist, daß sich der Massenschwerpunkt der einen axialen Antriebseinheit in deren mittleren Verschiebungsstellung senkrecht oder im wesentlichen senkrecht über dem Massenschwerpunkt der anderen axialen Antriebseinheit in deren mittleren Verschiebungsstellung befindet.

Insbesondere kann die Anordnung so sein, daß die Antriebseinheiten kreuzweise zueinander angeordnet sind, und zwar insbesondere einzeln oder paarweise.

Eine besonders bevorzugte Ausbildung des mehraxialen Antriebselements nach der Erfindung zeichnet sich dadurch aus, daß die Längszylindereinheit zwei Kolben-Zylinder-Einheiten mit je einem parallel zum Lastkolben verschiebbaren Antriebskolben aufweist, wobei je einer der beiden Antriebskolben mit je einem Längsende des Lastkolbens über je eine den zugeordneten Antriebskolben von den Querkräften entkuppelnde, jedoch Druck- und/oder Zuglängskräfte desselben auf den Lastkolben übertragende Kupplung verbunden ist.

Auf diese Weise ergibt sich ein symmetrischer Aufbau, der sowohl kräftemäßig als auch baulich besonders vorteilhaft ist und es ermöglicht, die einzelnen Längszylindereinheiten in besonders günstiger Weise zu dem mehraxialen Antriebselement nach der Erfindung zusammenzubauen.

Weiter kann das mehraxiale Antriebselement so ausgebildet sein, daß bei dessen Längszylindereinheiten die einander zugewandten Enden der beiden Antriebskolben durch ein Verbindungselement miteinander verbunden sind, das abdichtend und in Verschiebungsrichtung der Antriebskolben verschiebbar durch wenigstens ein Trennelement hindurchgeführt ist, welches den ersten und zweiten Druckströmungsmittelraum voneinander trennt. Dadurch, daß die Enden der Antriebskolben einander zugewandt sind, ergeben sich unmittelbar nebeneinanderliegende Druckströmungsmittelräume, wodurch sich optimal kurve Zu- und Ableitungswege zwischen steuerndem Servoventil oder steuernden Servoventilen und dem ersten und zweiten Strömungsmittelraum ergeben. Hierbei können die steuernden Servoventile auf beiden Seiten der Längszylindereinheiten in deren Längsmitte angeordnet werden, und sie führen ohne irgendwelche wesentlichen Zuleitungswege praktisch direkt in die Druckströmungsmittelräume. Damit ist die Entfernung zu den Druckströmungsmittelräumen, d.h. den von den Servoventilen zu steuernden Zylinderkammern, optimal kurz und hubunabhängig, wodurch es möglich ist, daß die notwendige Leistung des Druckaggregats gegenüber dem Fall, in welchem nach dem Stande der Technik übliche Längszylindereinheiten verwendet werden, verkleinert wird; und außerdem ist das Regelverhalten solcher Längszylindereinheiten wesentlich besser als bei bekannten Längszylindereinheiten, da keine Verzögerungen durch lange Zu- und Ableitungen auftreten.

Die beiden Antriebskolben der jeweiligen Längszylindereinheit können koaxial verschiebbar in der gemeinsamen Zylindereinheit, insbesondere dem gemeinsamen Zylinder, angeordnet sein.

Ein besonders günstiger Zusammenbau des mehraxialen Antriebselements nach der Erfindung wird erfindungsgemäß erreicht durch einen zwischen dem Antriebskolben, insbesondere dessen freiem Ende, und dem Lastkolben, insbesondere dessen dem freien Ende des Antriebskolbens benachbartem Ende, vorgesehenen Umlenkkopf, der sich quer zur Verschiebungsrichtung des Antriebskolbens und des Lastkolbens erstreckt und fest am Lastkolben angebracht ist, wobei die Kupplung zwischen dem Umlenkkopf und dem Kolben vorgesehen ist.

Dieser Umlenkkopf, insbesondere wenn je einer an beiden Enden des Lastkolbens angebracht ist, läßt sich nämlich in sehr vorteilhafter Weise als das Bauteil benutzen, auf bzw. an dem die Längszylindereinheiten einer andersachsigen Antriebseinheit direkt oder über einen Auflage- bzw. Montagetisch angebracht werden können oder an dem das Element, beispielsweise ein Kreuztisch, angebracht wird, an dem sich der Krafteinleitungspunkt befindet, über den Kraft von dem mehraxialen Antriebselement nach außen abgegeben, beispielsweise in eine Belastungseinrichtung eingeleitet, wird.

Beispielsweise ist es nach der Erfindung möglich, auf diese Weise drei Antriebseinheiten zu einem dreiaxialen Antriebselement zusammenzubauen, dessen Achsen vorzugsweise senkrecht zueinander verlaufen. Hierbei können eine oder mehrere axiale Antriebseinheiten zwei oder mehr parallel zueinander angeordnete Längszylindereinheiten umfassen, so daß auf diese Weise außerordentlich hohe Längskräfte erzeugt und Seitenkräfte bei insgesamt sehr kompaktem Aufbau und ohne das Erfordernis eines Geometrieausgleichs aufgenommen werden können.

Bei einer bevorzugten Ausführungsform des erfindungsgemäßen mehraxialen Antriebselements ist die eine Längszylindereinheit der einen Antriebseinheit auf zwei benachbarten Umlenkköpfen zweiter paralleler Längszylindereinheiten der anderen Antriebseinheit angebracht, und die andere Längszylindereinheit der einen Antriebseinheit ist auf den beiden anderen benachbarten Umlenkköpfen der Längszylindereinheiten der anderen Antriebseinheit befestigt.

Andere Weiterbildungen des mehraxialen Antriebselements nach der Erfindung sind in den Unteransprüchen angegeben. Die Erfindung sei nachstehend anhand einiger in den Figuren der Zeichnung dargestellter, besonders bevorzugter Ausführungsformen von erfindungsgemäßen mehraxialen Antriebselementen näher erläutert; es zeigen:

Figur 1 eine bevorzugte Ausführungsform eines mehraxialen Antriebselements nach der Erfindung, das drei zueinander senkrechte Antriebsachsen hat, wobei das Antriebselement im auseinandergezogenen Zustand dargestellt ist, damit die Einzelheiten besser sichtbar sind;

Figur 2 den unteren Teil des mehraxialen Antriebselements, welcher den Antrieb in der senkrechten Achse oder der Z-Achse erzeugt und vorwiegend von einer im wesentlichen konventionellen pneumatischen oder hydraulischen Kolben-Zylinder-Einheit gebildet wird;

Figur 3 den oberen Teil des mehraxialen Antriebselements der Figur 1, welcher den Antrieb in zwei zueinander senkrechten Horizontalachsen bewirkt und welcher außerdem einen Kreuztisch umfaßt, über dessen mit einem Kreuz gekennzeichneten Punkt die Kraft nach außen weitergeleitet wird;

Figur 4 eine Seitenaufrißansicht des mehraxialen Antriebselements der Figuren 1 bis 3, welche eine mögliche vorteilhafte Ausführung der Zu- und Ableitungen für das Druckströmungsmittel veranschaulicht;

Figur 5 einen Vertikalschnitt durch eine Antriebseinheit, die aus Längszylindereinheiten aufgebaut ist und als untere Antriebseinheit anstelle der Antriebseinheit der Figur 2 in dem Antriebselement der Figur 1 vorgesehen sein kann;

Figur 6 einen Längsschnitt durch eine Ausführungsform einer Längszylindereinheit für ein mehraxiales Antriebselement nach der Erfindung;

Figur 7 eine Aufsicht auf die in Figur 6 gezeigte Längszylindereinheit;

Figur 8 eine perspektivische Darstellung einer Ausführungsform einer Längszylindereinheit für ein mehraxiales Antriebselement, wobei jedoch nur der prinzipielle Aufbau ohne nähere Einzelheiten der Kupplungen, der Antriebskolben etc. aus Gründen der vereinfachten Darstellung gezeigt ist;

Figur 9 einen Längsschnitt durch den gemeinsamen Führungsblock der Längszylindereinheit der Figur 8, in welcher die Längsführung für den Lastkolben und die Zylinderbohrungen für die Antriebskolben Führungs- und Dichtungselemente aufweist;

Figur 10 eine Ansicht eines Lastkolbens von der Seite und von vorn, sowie eine Seitenansicht einer als Verbindung zwischen zwei Antriebskolben vorgesehenen Stange und eine Längsschnittansicht durch einen der beiden Antriebskolben der Längszylindereinheit gemäß Figur 8;

Figur 11 eine gegenüber den Figuren 9 und 10 vergrößerte Schnittansicht durch das eine Längsende der Längszylindereinheit der Figur 8, welche die Verbindung in dem einen Antriebskolben und in einem Ende des Lastkolbens in näheren Einzelheiten veranschaulicht;

Figuren 12 und 13 zwei verschiedene Ausführungsformen möglicher Antriebskolben und einer Anordnung der Druckströmungsmitteldichtungen für diese Antriebskolben;

Figur 14 eine Stirnansicht von einem der Umlenkköpfe der Längszylindereinheit der Figur 8;

Figur 15 einen Schnitt durch den Umlenkkopf der Figur 14 in Längsrichtung der Längszylindereinheit;

Figur 16 eine Aufsicht auf den Umlenkkopf der Figuren 14 und 15 von unten;

Figur 17 eine Ansicht auf die dem Antriebskolben und dem Lastkolben zugewandte Seite des Umlenkkopfes der Figuren 14, 15 und 16 in dem Zustand dieses Umlenkkopfes, in dem er von dem Lastkolben abmontiert ist;

Figur 18 einen Längsschnitt durch eines der beiden Trennelemente, die in dem Führungsblock der Figur 9 zwischen den beiden Zylinderkammern der Antriebszylinder vorgesehen sind;

Figuren 19 bis 22 Querschnitte durch Längszylindereinheiten, deren Lastkolben verschiedene Querschnittskonfigurationen haben;

Figur 23 einen Querschnitt durch eine Längszylindereinheit mit mehreren parallel angeordneten und miteinander verbundenen Lastkolben und von rundem Querschnitt;

Figur 24 einen Längsschnitt durch einen Führungsblock, in den Zylindereinsatzbuchsen und Längsführungseinsatzbuchsen eingesetzt sind;

Figur 25 eine Seitenaufrißansicht einer Ausführungsform einer Längszylindereinheit, die mehrere parallel zueinander angeordnete und miteinander verbundene Lastkolben und einen darüber vorgesehenen Längstisch aufweist; und

Figur 26 eine Stirnansicht der Längszylindereinheit der Figur 25.

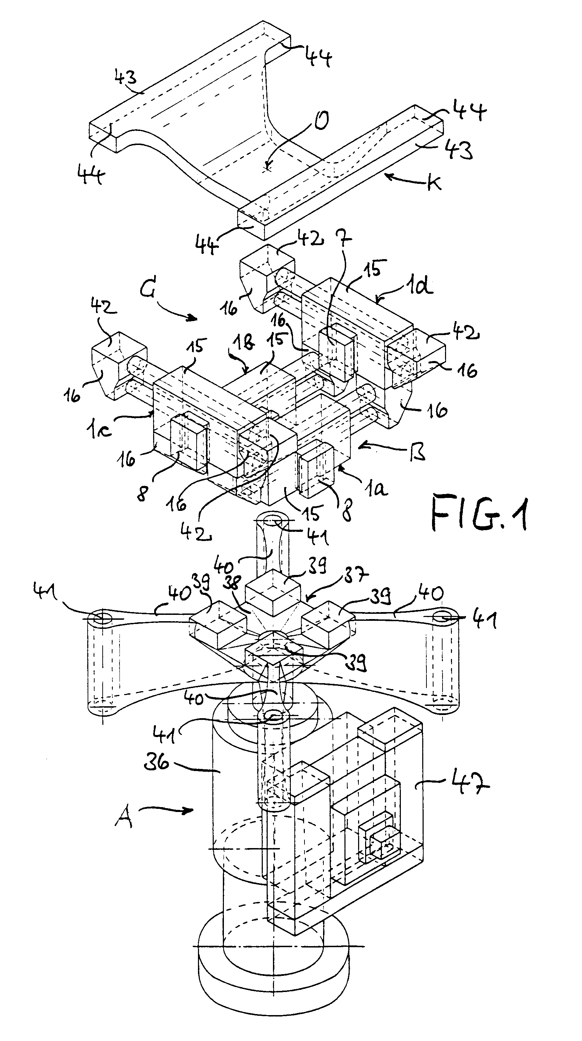

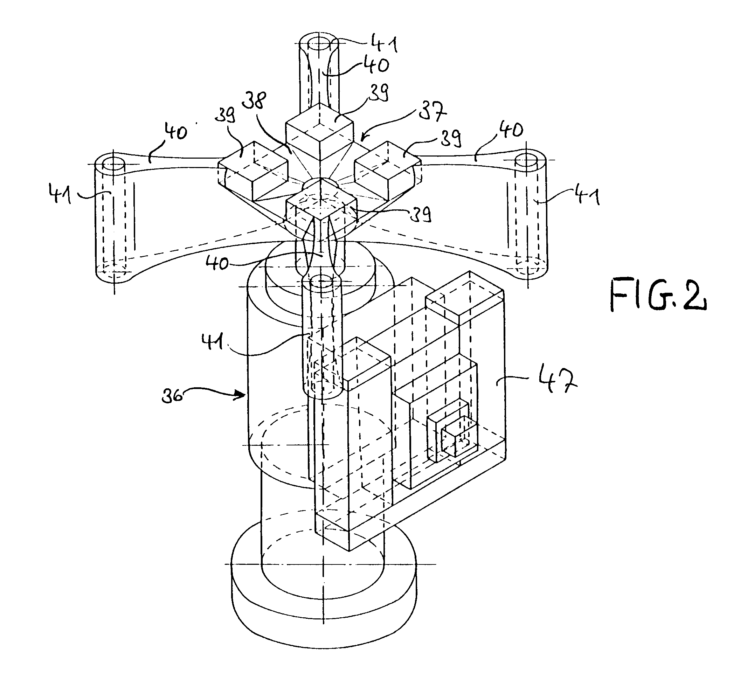

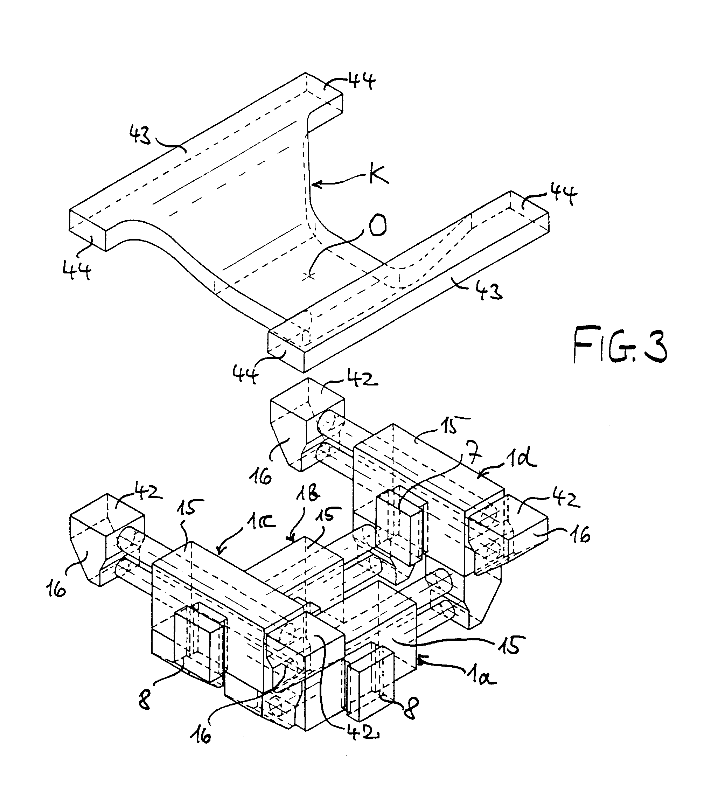

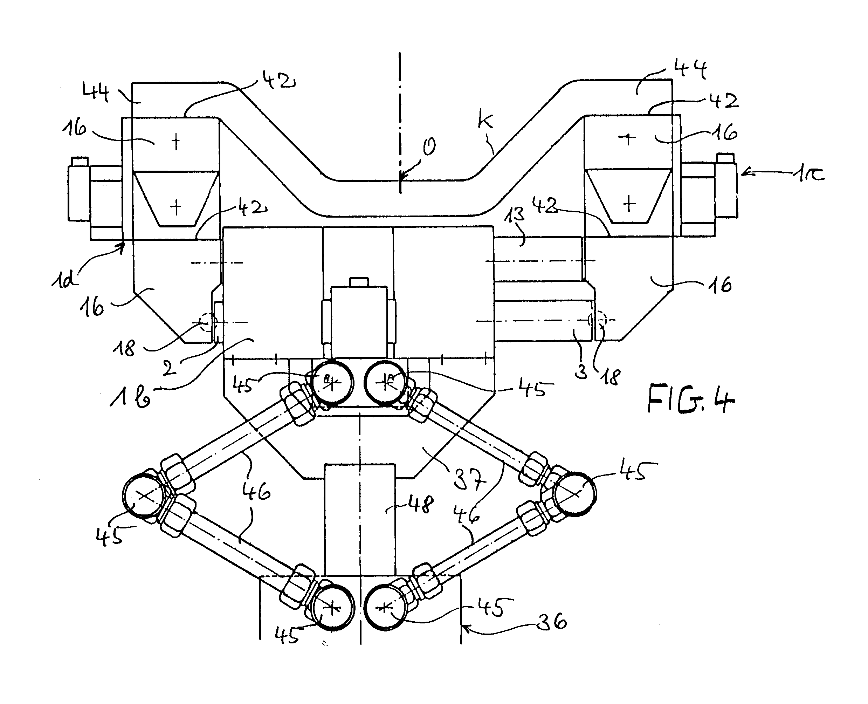

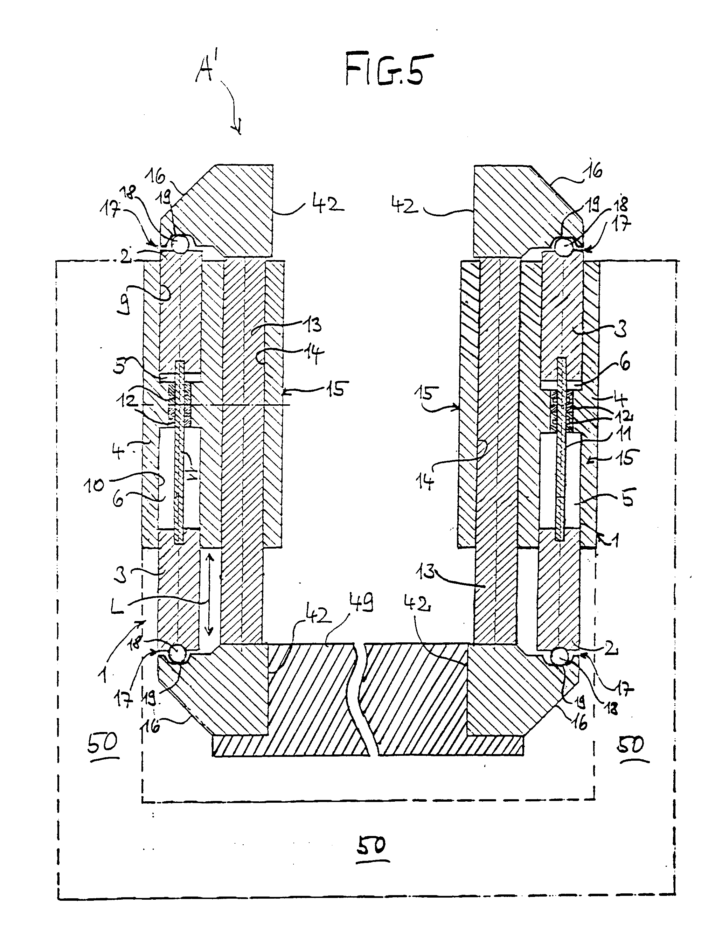

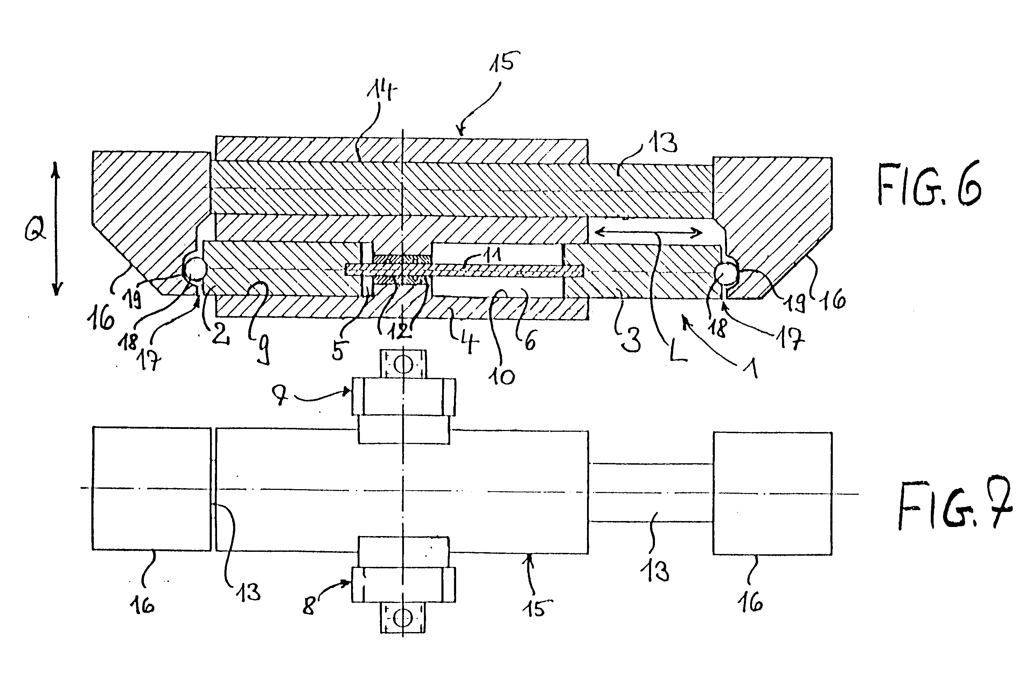

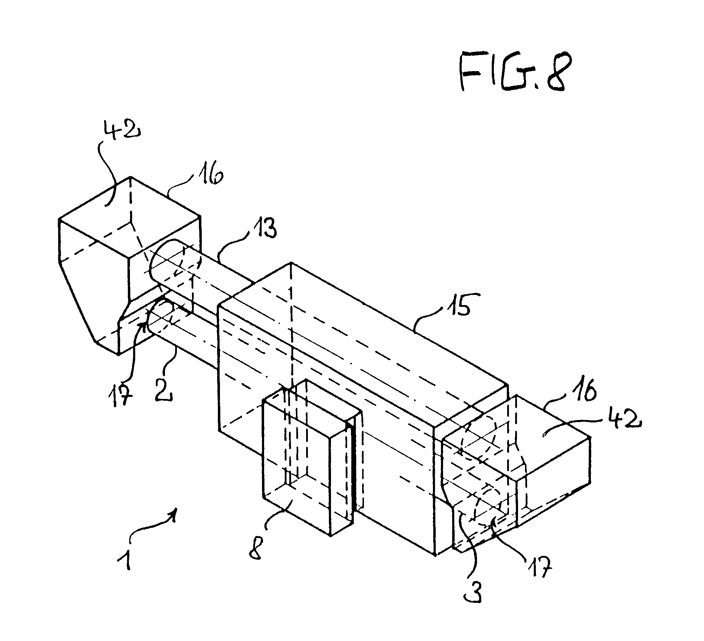

Die in Figur 1 in auseinandergezogenem Zustand gezeigte Ausführungsform eines mehraxialen Antriebselements, dessen unterer Teil in Figur 2 und dessen oberer Teil in Figur 3 in gegenüber Figur 1 vergrößertem Maßstab dargestellt ist, umfaßt drei Antriebseinheiten A, B und C. Die untere Antriebseinheit A dient zum Antrieb in der Vertikalrichtung, die hier auch als Z-Richtung bezeichnet wird, während die Antriebseinheiten B und C zum Antrieb in zwei zueinander senkrechten Horizontalrichtungen dienen, die hier auch als X-Richtung und Y-Richtung bezeichnet werden. Außerdem ist in den Figuren 1 und 3 ein Kreuztisch K gezeigt, der auf der oberen Antriebseinheit C befestigt wird und an dessen vertieft gelegenem Punkt O die Krafteinleitung erfolgt, d.h. die Antriebskraft nach außen abgeleitet wird, um an irgendeiner gewünschten Stelle, die mit der Antriebskraft beaufschlagt werden soll, eingeleitet zu werden.

Während die Antriebskraft der unteren Antriebseinheit in dem Antriebselement der Figuren 1 bis 3 durch eine konventionelle Kolben-Zylinder-Einheit erzeugt wird, werden die Antriebskräfte in der mittleren Antriebseinheit B und in der oberen Antriebseinheit C durch neuartige Längszylindereinheiten 1 erzeugt, die einen außerordentlich kompakten Aufbau des mehraxialen Antriebselements und die Aufnahme sehr hoher Seitenkräfte durch dieses mehraxiale Antriebselement ermöglichen.

Im einzelnen besteht die mittleren Antriebseinheit B aus den beiden, bezogen auf die Ansicht der Figuren 1 und 3, unteren Längszylindereinheiten 1, die hier aus Unterscheidungsgründen mit 1a und 1b bezeichnet sind, und die obere Antriebseinheit C besteht aus den beiden oberen Längszylindereinheiten 1c und 1d. Diese allgemein mit 1 bezeichneten Längszylindereinheiten seien zunächst nachstehend, insbesondere unter Bezugnahme auf die Figuren 6, 7 und 8, näher erläutert, bevor das mehraxiale Antriebselement nach den Figuren 1 bis 5 weiter beschrieben wird, da diese Längszylindereinheiten 1, d.h. 1a bis 1d, für das weitere Verständnis dieses mehraxialen Antriebselements, wie es in der Zeichnung veranschaulicht ist, wichtig sind:

Die dargestellte Längszylindereinheit 1 umfaßt zwei pneumatische oder hydraulische Kolben-Zylinder-Einheiten, in denen ein erster Antriebskolben 2 und ein zweiter Antriebskolben 3 in einem gemeinsamen Zylinder 4 hin- und herverschiebbar angeordnet sind und zusammen mit dem Zylinder 4 einen ersten Druckströmungsmittelraum 5 und einen zweiten Druckströmungsmittelraum 6 begrenzen, in die und aus denen ein pneumatisches oder hydraulisches Druckströmungsmittel zum Verschieben der Antriebskolben 2 und 3 über Servoventile 7 und 8 zu- und abführbar ist. Im einzelnen umfaßt der gemeinsame Zylinder 4 eine erste Zylinderbohrung 9, in welcher der erste Antriebskolben 2 in Längsrichtung der Längszylindereinheit verschiebbar geführt ist, und eine zu der ersten Zylinderbohrung 9 koaxiale Zylinderbohrung 10, in welcher der zweite Antriebskolben 3 koaxial zum ersten Antriebskolben 1 verschiebbar geführt ist.

Wie Figur 6 zeigt, ist der erste und zweite Druckströmungsmittelraum 5 und 6 zwischen den einander zugewandten Längsenden der beiden Antriebskolben 2 und 3 vorgesehen. Diese einander zugewandten Enden der beiden Antriebskolben 2 und 3 sind durch ein Verbindungselement 11, vorwiegend in Form einer Stange, miteinander verbunden. Dieses Verbindungselement 11 ist abdichtend und in der Verschiebungsrichtung der Antriebskolben 2 und 3 verschiebbar durch zwei Trennelemente 12 hindurchgeführt, die den ersten und zweiten Druckströmungsmittelraum 5 und 6 voneinander trennen.

Außerdem umfaßt die Längszylindereinheit 1 einen Lastkolben 13, der einen in Längsrichtung gleichbleibenden, beispielsweise runden, Querschnitt hat und in einer im Querschnitt komplementären Längsführung 14 parallel zum ersten und zweiten Antriebskolben 2 und 3 verschiebbar angeordnet ist.

Vorwiegend sind die beiden Antriebskolben 2 und 3 und der Lastkolben 13 in einem gemeinsamen Führungsblock 15 vorgesehen, der den gemeinsamen Zylinder 4 und die Längsführung 14 umfaßt, wobei dieser gemeinsame Führungsblock 15 insbesondere ein einstückiges Bauteil sein kann, in welchem die Längsführung 14 und die Zylinderbohrungen 9 und 10 vorgesehen sind.

An jedem der beiden Längsenden des Lastkolbens 13 ist ein Umlenkkopf 16 befestigt, der sich, wie insbesondere die Figuren 6 und 8 zeigen, quer, und zwar im wesentlichen senkrecht, zur Verschiebungsrichtung L (= Richtung der Längskraft) der Antriebskolben 2, 3 und des Lastkolbens 13 erstreckt.

Zwischen jedem der beiden Umlenkköpfe 16 und dem ihm benachbarten Antriebskolben 2 bzw. 3 ist eine Kupplung 17 angeordnet, die derart ausgebildet ist, daß

(a) sie den jeweiligen Antriebskolben 2 bzw. 3 von Querkräften entkuppelt, die quer, insbesondere senkrecht, zur Verschiebungsrichtung L von außen her auf den Lastkolben 13 bzw. die Umlenkköpfe 16 einwirken, und

(b) sie jedoch in der Verschiebungsrichtung L der Antriebskolben 2, 3 wirkende Längskräfte, zumindest Längsdruckkräfte zwischen dem jeweiligen Antriebskolben 2 bzw. 3 und dem Lastkolben 13 bzw. dem jeweiligen Umlenkkopf 16 übertragen.

Auf diese Weise werden alle oder praktisch alle von außen her einwirkenden Querkräfte von dem Lastkolben 13 aufgenommen, so daß infolgedessen die Antriebskolben 2 und 3 praktisch von allen Querkräften entlastet werden.

Eine bevorzugte Ausführungsform einer Kupplung 17, die weiter unten noch in näheren Einzelheiten erläutert wird, ist eine Kugel-Kugelkalotten-Lagerung, die eine Kugel 18 aufweist, welche zwischen und dem Antriebskolben 2 bzw. 3 und dem Umlenkkopf 16 angeordnet ist und in einer Kugelkalotte 19 abrollen kann, deren Längsrichtung senkrecht zur Verschiebungsrichtung L der Antriebskolben 2, 3 des Lastkolbens 16 velräuft, so daß infolgendessen zwischen dem Antriebskolben 2 bzw. 3 und dem zugeordneten Umlenkkopf 16 zwar Längskräfte übertragen werden, jedoch keine Querkräfte, da diese nur ein Rollen der Kugel 18 in der Querrichtung Q bewirken.

Durch den kugelförmigen Angriffspunkt im Antriebskolben 2 bzw. 3 sowie die als hohlkugelförmige Längsmulde ausgeführte Kugelkalotte 19 im Umlenkkopf 16 erfolgt infolgedessen keine Beeinflussung des Antriebskolbens 2 bzw. 3 durch die Seitenkräfte des Lastkolbens 13.

Funktionell besteht die Längszylindereinheit, wie sie in näheren Einzelheiten in den Figuren 6 und 8 dargestellt ist, grundsätzlich aus zwei Funktionsteilen, nämlich:

(1) dem Antriebsteil und

(2) dem Lastelement bzw. der Lasteinheit.

Das Antriebsteil ist, bezogen auf die Ansicht der Figuren 6 und 8, der untere Längsteil des Längszylinderelements 1, und dieses Antriebsteil besteht im wesentlichen aus den beiden Antriebskolben 2, 3 und dem gemeinsamen Zylinder 4 sowie dem Verbindungselement 11 und den Trennelementen 12.

Das Lastelement bzw. die Lasteinheit dagegen ist der obere Längsteil der in den Figuren 6 und 8 dargestellten Längszylindereinheit 1, und dieses Lastelement bzw. diese Lasteinheit besteht im wesentlichen aus dem Lastkolben 13 und dessen Längsführung 14. Das Lastelement bzw. die Lasteinheit übernimmt die zu übertragenden Längs- und Seitenkräfte. Je nach dem Anwendungsfall kann die Lagerung des Lastkolbens 13 in dessen Längsführung 14 hydrostatisch oder als Gleitlagerung ausgebildet sein.

Diese beiden funktionellen Elemente bzw. Einheiten sind mechanisch durch die beidseitig angeordneten Umlenkköpfe 16 und die Kupplungen 17 miteinander verbunden.

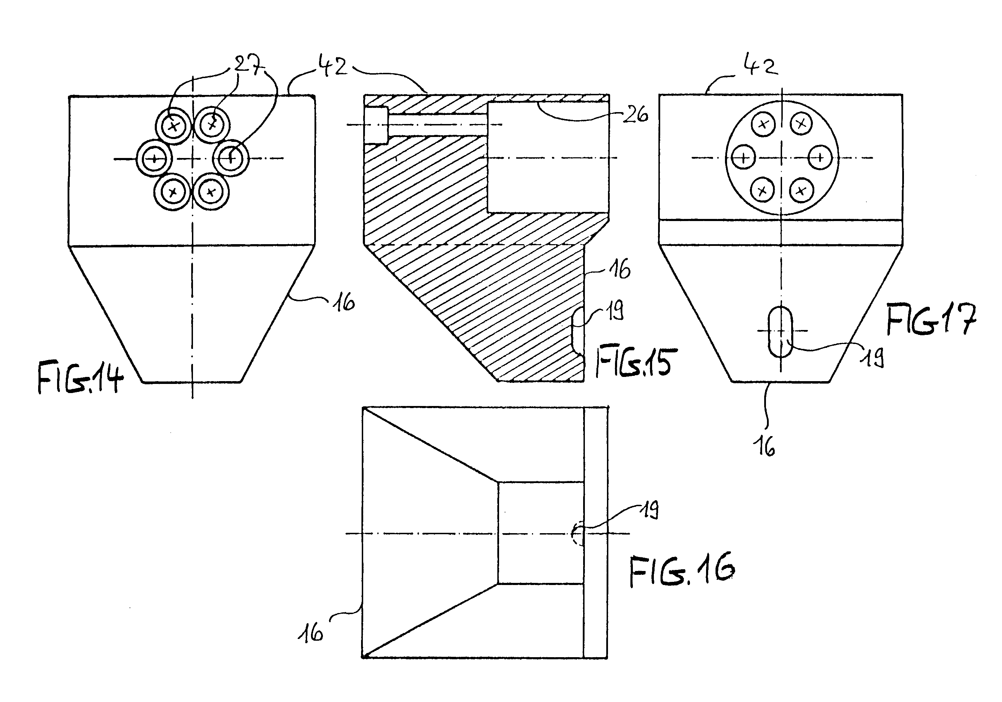

Die Figuren 9 bis 12 und 14 bis 18 zeigen bauliche Einzelheiten der in den Figuren 6 bis 8 dargestellten Längszylindereinheit, die nachstehend näher erläutert werden:

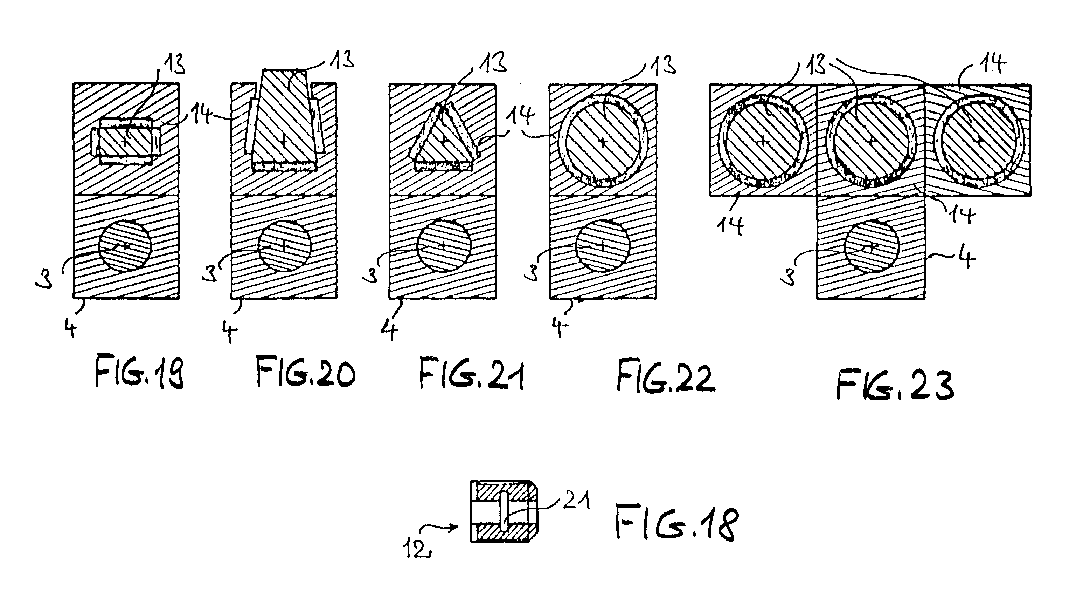

Wie die Figuren 9 und 18 zeigen, sind als Trennelemente 12 zwei Buchsen vorgesehen, die in eine Bohrung 20 eingesetzt, beispielsweise eingeschraubt, sind, welche die beiden Druckströmungsmittelräume 5 und 6 miteinander verbindet. In jeder dieser Buchsen ist eine Dichtung 21, beispielsweise eine Nutring-Dichtung, in einer entsprechenden Ringnut vorgesehen, welche für eine Druckströmungsmittelabdichtung zwischen der Buchse und dem Verbindungselement 11 sorgt. Die beiden Trennelemente 12 sind gegenseitig gekontert.

Das Verbindungselement 11 ist an seinen beiden Längsenden 22 und 23 mit Gewinde versehen und damit in entsprechende Gewindebohrungen 24 eingeschraubt, die in den Antriebskolben 2 und 3 vorgesehen sind. Das Verbindungselement 11 übernimmt keine Kraftübertragung, sondern es dient lediglich dazu, die beiden Antriebskolbens 2 und 3 über die an ihren Enden angeordneten Kugeln 19 mit den Umlenkköpfen 16 spielfrei zu verbinden. Der durch entsprechendes Einschrauben des Verbindungselements 11 in die Antriebskolben 2 und 3 eingestellte Abstand zwischen diesen Antriebskolben 2 und 3 wird über eine Konterschraube 25 im Antriebskolben 2 bzw. 3 fixiert (siehe Figur 11).

Auf diese Weise kann durch das Verbindungselement 11 der Kugelandruck der Kugel 18 am Umlenkkopf 16 eingestellt und mit den beiden Konterschrauben 25, von denen in jedem Antriebskolben je eine vorhanden ist, fixiert werden.

Ein spielfreier Kugelandruck ist nicht nur deswegen wichtig, damit die Kugel 18 nicht aus ihrer Lagerung herausfällt, sondern insbesondere auch deswegen, damit keine Stöße beim Umkehren der Bewegungsrichtung der Antriebskolben 2, 3 auftreten.

Anstelle einer Kugel 18 kann auch jeweils eine Walze mit einer entsprechenden Abrollfläche, die hier als Walzenkalotte bezeichnet ist, verwendet werden, wobei diese Abrollfläche sich ebenfalls in der Querrichtung Q so lange erstreckt, daß praktisch keine Querkräfte zwischen den Antriebskolben 2, 3 und dem Lastkolben 13 übertragen werden. Es kann auch statt einer einzelnen Kugel 18 oder einer entsprechenden Walze ein ganzes Kugel- oder Walzenlager vorgesehen sein.

Die Umlenkknöpfe 16 sind mit dem Lastkolben 13 über eine Paßbohrung 26 und Schrauben 27 verbunden, die in Gewindebohrungen in den Stirnseiten des Lastkolbens 13 eingeschraubt werden.

Im Gegensatz zu der länglichen Kugelkalotte 19, die im Umlenkkopf 16 vorgesehen ist, ist die im Ende des Antriebskolbens 2 bzw. 3 ausgebildete Kugelkalotte 29 nicht länglich, da sie lediglich zur Aufnahme der Kugel 18 dient, und es genügt, wenn die Kugel 18 in der länglichen Kugelkalotte 19 in der Querrichtung Q abrollen kann.

Wie die Figur 9 zeigt, ist hier die für eine hydrostatische Lagerung des Lastkolbens 13 ausgebildete Längsführung 14 in zwei Längsbereiche 14a und 14b unterteilt, die durch Dichtungs- und Führungselemente 30 voneinander getrennt sind, damit die Lagerung des Lastkolbens 13 im Falle von an seinen beiden Enden angreifenden Seitenkräften nicht zu weich wird, indem das Lageröl von einem Ende der Längsführung 14 zum anderen fließt, wenn der Lastkolben durch die Seitenkräfte "gekippt" wird. Durch diese Unterteilung wird die Lagerung des Lastkolbens 13 steifer, weil das für die hydrostatische Lagerung verwendete Lageröl wegen der mittigen Dichtungs- und Führungselemente 30 von einem Ende der Längsführung jeweils nur bis zur Mitte der Längsführung fließen kann.

Sowohl beim Antriebs- als auch beim Lastelement können die Dichtungs- und Führungselemente 30 (siehe insbesondere die Figuren 9, 12 und 13) je nach Belieben sowohl im Zylinder 4 bzw. in der Längsführung 14 als auch im Kolbenkörper des Antriebskolbens 2, 3 bzw. des Lastkolbens 13 eingebaut sein. Beim Einbau der Dichtungs- und Führungselemente 30 im Kolbenkörper des Antriebskolbens 2, 3 kann die Masse des Antriebskolbens bei gleicher Nennkraft drastisch verringert werden. Beim Einbau der Dichtungs- und Führungselemente 30 im Kolbenkörper des Lastkolbens 13 verringert sich außer der Masse auch die mögliche Seitenkraft, so daß es sich für große Seitenkräfte empfiehlt, die Dichtungs- und Führungselemente 30 in der Längsführung 14 unterzubringen.

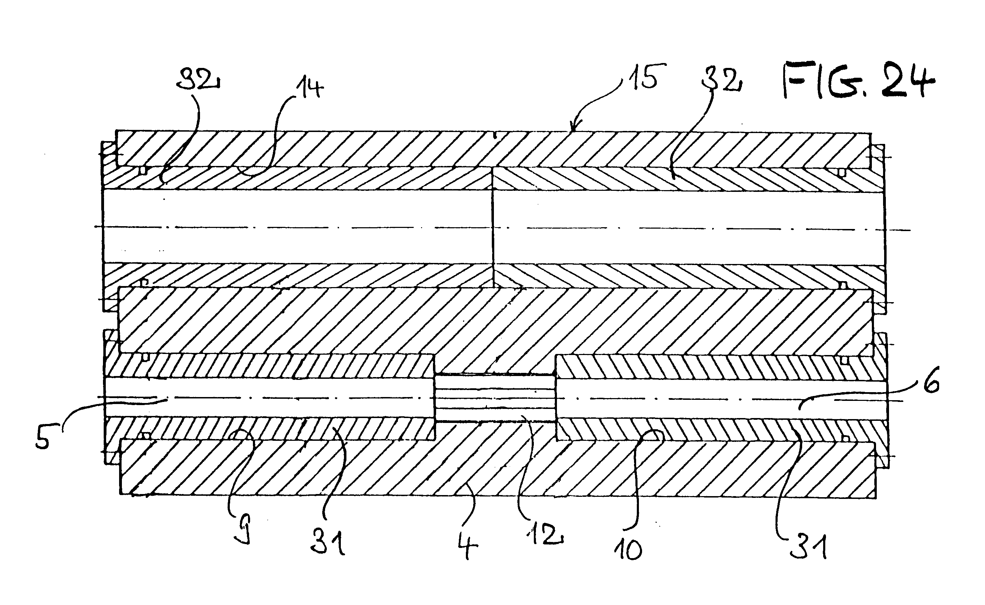

In Figur 24 ist ein Längsschnitt durch einen Führungsblock 15 einer Längszylindereinheit gezeigt, in den sowohl in die erste Zylinderbohrung 9 als auch in die zweite Zylinderbohrung 10 je eine Zylindereinsatzbuchse 31 eingefügt ist, die den lichten Querschnitt der Zylinderbohrungen 9, 10 verkleinert und in die ein jeweils an diesen lichten Querschnitt angepaßter Antriebskolben (nicht gezeigt) eingesetzt wird. Außerdem ist in die Längsführung 14 von jedem Ende her eine Längsführungseinsatzbuchse 32 eingefügt, welche den lichten Querschnitt der Längsführung 14 verkleinert und in die ein in seinem Querschnitt entsprechend angepaßter Lastkolben (nicht gezeigt) eingefügt wird.

Durch den Einsatz solcher Zylindereinsatzbuchsen 31 und/oder Längsführungseinsatzbuchsen 32 kann man in einfacher und kostengünstiger Weise die Nennkräfte der Antriebseinheit und/oder der Lasteinheit verändern. Dadurch kann auch das Volumen der Druckströmungsmittelräume 5 und 6 in optimaler Weise angepaßt werden, was wiederum das Regelverhalten positiv beeinflußt. Man kann auch grundsätzlich Zylinder- und/oder Längsführungseinsatzbuchsen einsetzen (Cartridge-Technik). Damit kann man bei einer kleinen Anzahl von Grundkörpern bzw. Bauteilen die Nennkräfte schnell und kostengünstig in vorbestimmten Grenzen variieren.

Die Figuren 19, 20, 21 und 22 zeigen Querschnitte durch Längszylindereinheiten, deren Lastkolben 13 und die hierzu im Querschnitt komplementär ausgebildeten Längsführungen 14 unterschiedliche Querschnittskonfigurationen haben, nämlich rechteckig, wie in Figur 19 dargestellt, trapezförmig, wie in Figur 20 veranschaulicht, dreieckig, wie aus Figur 21 ersichtlich ist, und kreisförmig, wie Figur 22 zeigt. Auch eine schwalbenschwanzförmige Ausbildung des Querschnitts kann, obwohl nicht dargestellt, ebenso wie andere, ebenfalls nicht dargestellte Querschnittskonfigurationen vorgesehen sein. Die Konfiguration des Querschnitts des Lastkolbens 13 und der dazugehörigen Längsführung 14 hängt vom jeweiligen Anwendungsfall ab. Entscheidend ist hier die Belastungsrichtung und die erforderliche Größe der Lagerfläche.

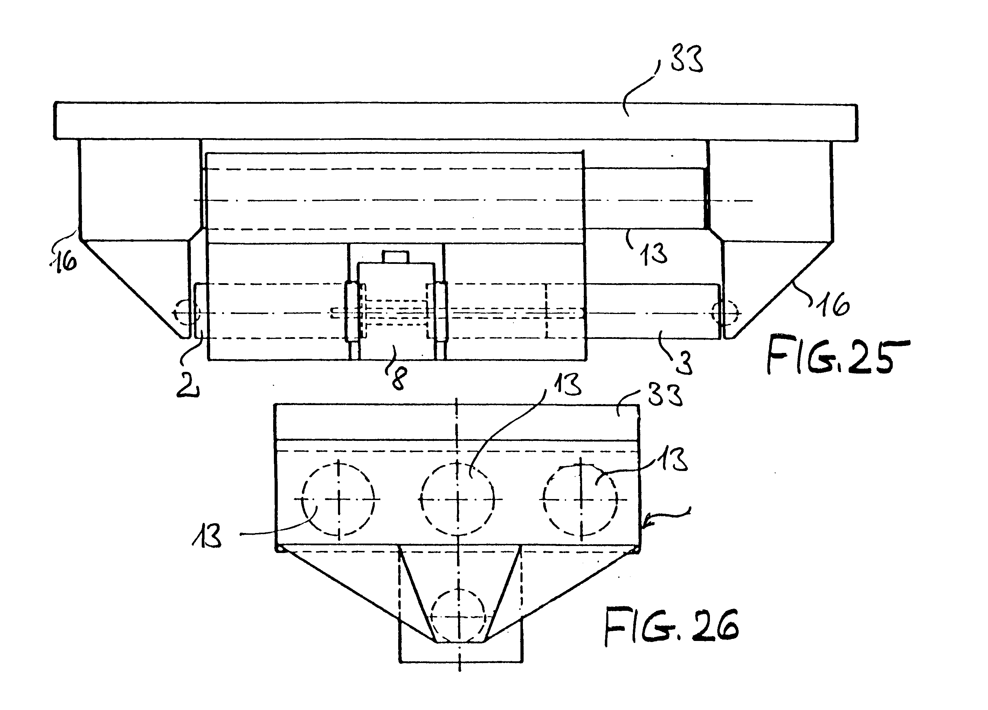

Die Figuren 25 und 26 zeigen eine Ausführungsform der Längszylindereinheit 1, bei der in einem gemeinsamen Führungsblock 15 parallel zueinander mehrere Lastkolben 13 verschiebbar angeordnet und über gemeinsame Umlenkköpfe 16 miteinander sowie mit einem ersten Antriebskolben 2 und einem zweiten Antriebskolben 3 verbunden sind. Die beiden Umlenkköpfe 16 sind außerdem durch einen Längstisch 33 miteinander verbunden, welcher auf der zu den Antriebskolben 2, 3 entgegengesetzten Seiten der Umlenkköpfe 16 angebracht ist, die, bezogen auf die Ansichten der Figuren 25 und 26, die Oberseite der Umlenkköpfe 16 ist.

Die hydraulische oder pneumatische Versorgung der Lasteinheit des Antriebsteils der Längszylindereinheiten 1 kann über einen, vorliegend nicht dargestellten, Druck- und Rückölanschluß bzw. Druck- und Rückluftanschluß erfolgen, der an der Unterseite der Längsführungseinheit angebracht und über Bohrungen mit einer Servoventileinheit verbunden sein kann. Über Bohrungen der Servoventileinheit kann dann das Servoventil 7 bzw. 8 mit Hydrauliköl bzw. Druckluft versorgt werden. Die Versorgung von hydrostatischen Lagern, wie beispielsweise eines hydrostatischen Lagers des Lastkolbens, wie es zum Beispiel in Verbindung mit Figur 9 erläutert worden ist, kann auch über die Servoventileinheit stattfinden.

Es sei nun in der Beschreibung des unter Verwendung der vorstehend beschriebenen Längszylindereinheiten aufgebauten mehraxialen Antriebselements gemäß den Figuren 1 bis 5 fortgefahren:

Zunächst wird diejenige dargestellte Ausführungsform des mehraxialen Antriebselements weiter beschrieben, die unter Verwendung einer handelsüblichen Längszylindereinheit nach dem Stande der Technik für diejenige Längszylindereinheit, welche die Verschiebung in der Vertikalrichtung bewirkt, aufgebaut und in den Figuren 1 bis 4 dargestellt ist.

Der Aufbau und die Funktionsweise dieses mehraxialen Antriebselements sind wie folgt:

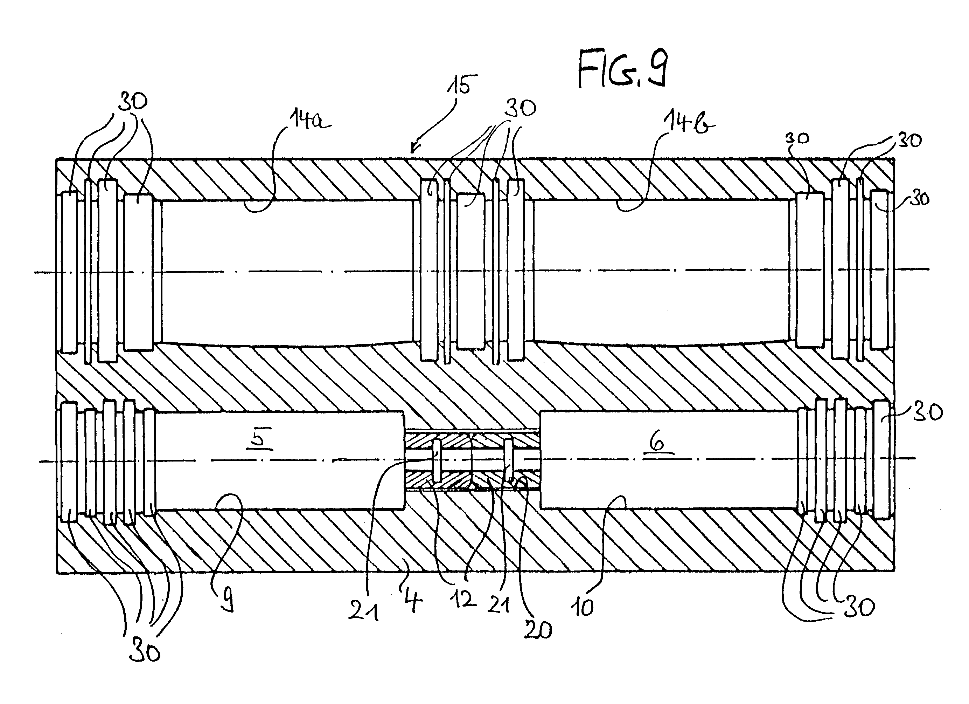

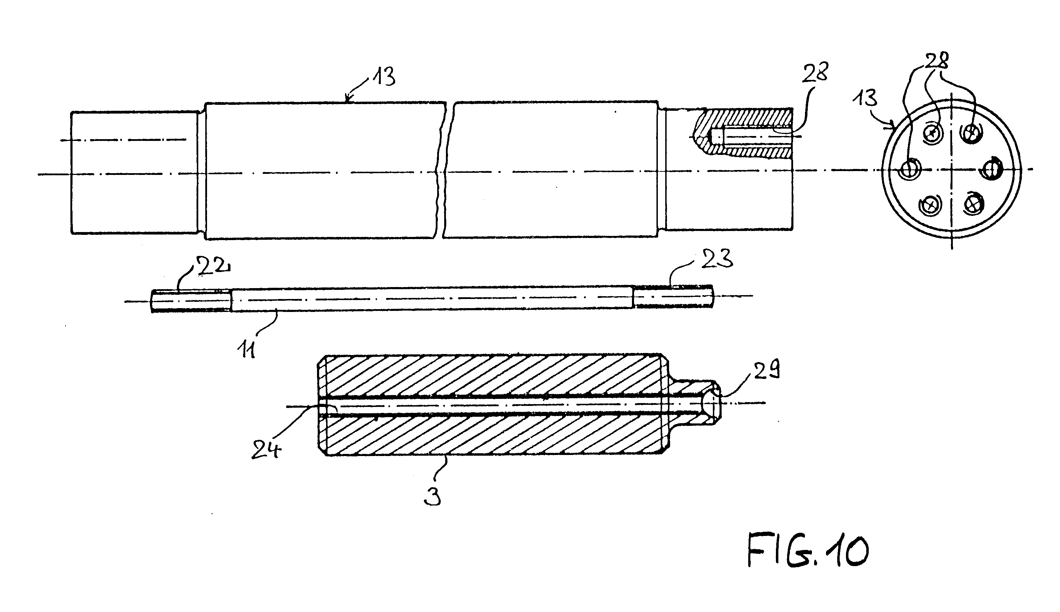

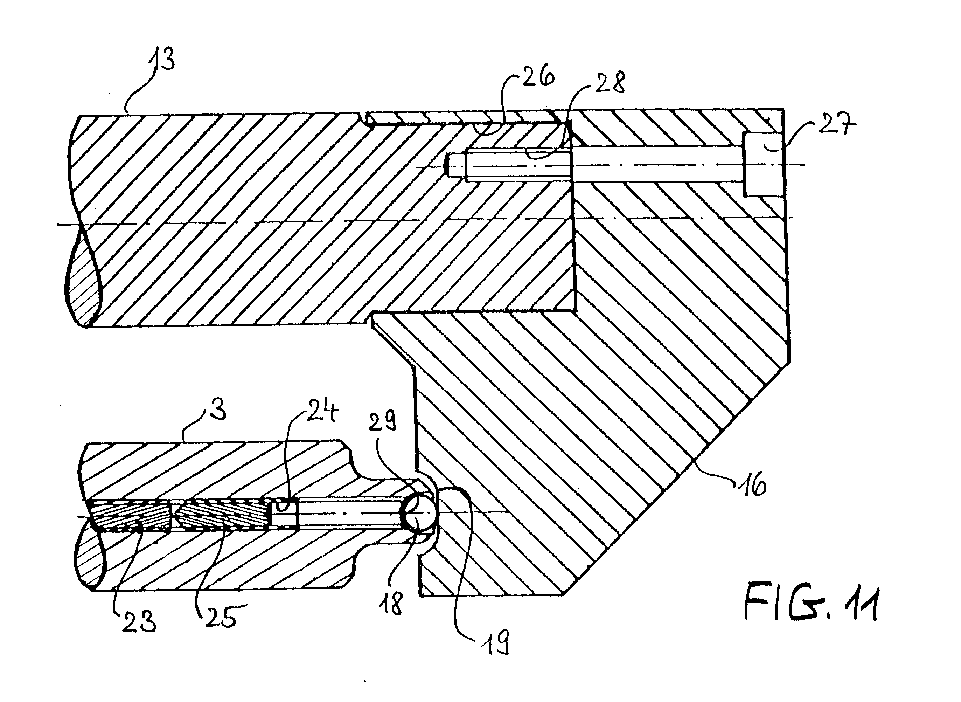

Auf die Kolbenstange (in Figur 4 mit 48 bezeichnet) eines Kolbens (nicht näher dargestellt) einer handelsüblichen Längszylindereinheit 36 nach dem Stande der Technik ist eine, vorzugsweise symmetrisch ausgebildete, Konsole 37 aufmontiert. Diese Konsole 37 umfaßt vorliegend eine sich horizontal erstreckende Tischplatte 38, auf der Montageblökke 39 angebracht sind, auf welchen wiederum die Antriebseinheiten B und C mit dem darauf vorgesehenen Kreuztisch K befestigt werden, wie weiter unten noch näher ausgeführt ist.

Die Konsole 37 ist nach außen über, vorliegend vier, Stützen 40 mit, vorliegend ebenfalls vier, Längsführungslagern 41 verbunden. Diese Längsführungslager 41 dienen als zusätzliche Stützlager, indem durch dieselben vertikale Führungsstangen (nicht gezeigt) hindurchgeführt werden, und sie sollen dadurch die vertikal ausgerichtete Längszylindereinheit 36 vor den auftretenden Seiten- bzw. Querkräften schützen Sie können je nach Belastungsintensität und -größe insbesondere als Gleitlager oder hydrostatische Lager ausgeführt sein.

Auf den Montageblöcken 39 der Konsole 37 sind die beiden unteren Längszylindereinheiten 1a und 1b für die eine horizontale Richtung, die hier auch als X-Richtung bezeichnet wird, montiert, und zwar sind die Führungsblöcke 15 (siehe auch die Figuren 6 und 8) der beiden Längszylindereinheiten 1a und 1b jeweils auf den oberen ebenen, horizontalen Oberflächen der Montageblöcke 39 befestigt, wobei jeweils einer der Führungsblöcke 15 auf jeweils zwei der Montageblöcke 39 montiert ist. Die Längszylindereinheiten 1a und 1b der Antriebseinheit B können durch getrennte Servoventile oder gemeinsam durch ein Servoventil gesteuert werden. Beide Längszylindereinheiten 1a und 1b werden synchron betrieben.

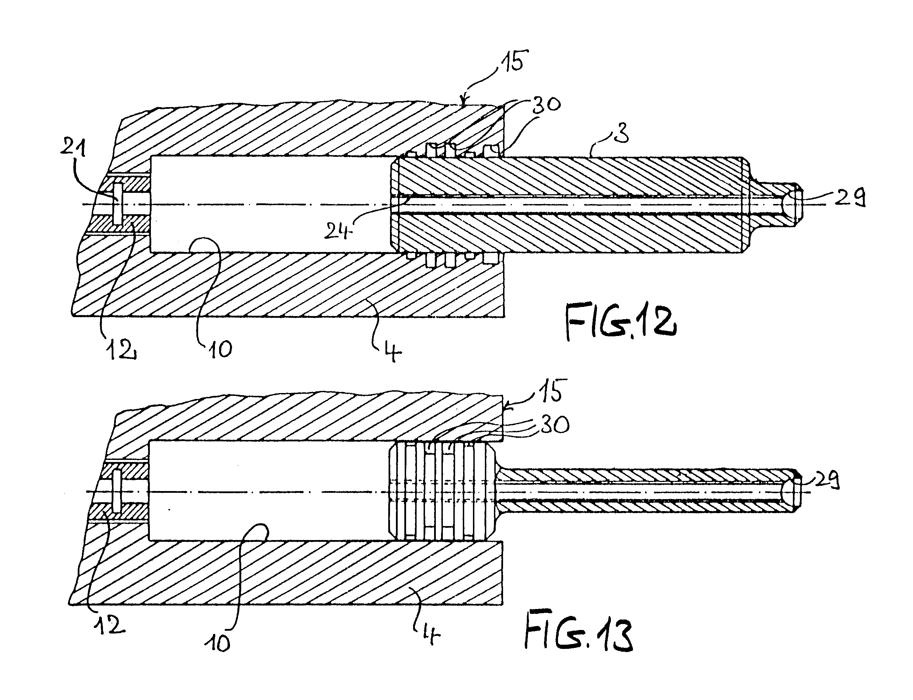

Wie verschiedene Figuren der Zeichnung zeigen, insbesondere die Figuren 1, 3, 5, 8 und 14 bis 17, haben die Umlenkköpfe 16 vorliegend ebene, horizontale obere Tischflächen 42 (die in Figur 5 vertikal verlaufen), und auf diesen Tischflächen 42 der Längszylindereinheiten 1a und 1b sind, wie die Figuren 1 und 3 zeigen, die Führungsblöcke 15 der Längszylindereinheiten 1c und 1d, welche die Antriebseinheit C bilden, befestigt. Im einzelnen ist der Führungsblock 15 der einen Längszylindereinheit 1c auf zwei benachbarten Umlenkköpfen 16 der beiden parallel im Abstand voneinander angeordneten Längszylindereinheiten 1a und 1b angebracht, während der Führungsblock 15 der anderen Längszylindereinheit 1d auf den beiden anderen benachbarten Umlenkköpfen 16 der Längszylindereinheiten 1a und 1b angebracht ist.

Die Längszylindereinheiten 1c und 1d sind gegenüber den Längszylindereinheiten 1a und 1b also in der Horizontalebene um 90° verdreht angeordnet, so daß sich ihre Verschiebungsrichtung senkrecht zur Verschiebungsrichtung der Längszylindereinheiten 1a und 1b in der Horizontalebene erstreckt, und diese Verschiebungsrichtung wird hier auch als Y-Richtung bezeichnet. Auch die Längszylindereinheiten 1c und 1d können, ebenso wie vorstehend hinsichtlich der Längszylindereinheiten 1a und 1b angegeben, durch getrennte Servoventile oder gemeinsam durch ein Servoventil gesteuert werden, und sie werden ebenfalls synchron betrieben.

Die Umlenkköpfe 16 der beiden Längszylindereinheiten 1c und 1d sind über den Kreuztisch K fest miteinander verbunden, indem die beiden Randleisten 43 des Kreuztischs K an ihren Enden 44 auf den Tischflächen 42 aufliegen und auf diesen Tischflächen befestigt sind.

Die Mitte O des Kreuztisches K ist, wie bereits erwähnt, die Mitte der Krafteinleitung für ein mehraxial zu prüfendes oder zu bewegendes Teil (nicht dargestellt). Dieser von der Mitte O gebildete Krafteinleitungspunkt ist tiefgelegt, damit der Schwerpunkt der gesamten Anordnung tief liegt, so daß möglichst wenig Seitenkräfte in den Vertikalstützlagern 41 auftreten. Die Bewegungen für die drei genannten Richtungen, nämlich die X-Richtung, die Y-Richtung und die Z-Richtung, können nun direkt, ohne Umrechnung oder Korrektur, wie sie für einen Geometrieausgleich erforderlich wäre, vorgegeben werden.

Die Zu- und Abführung der hydraulischen Energie für die Längszylindereinheiten 1a bis 1d erfolgt bevorzugt über Rohrgelenke 45 (siehe Figur 4) und Rohre 46, so daß keine Schläuche als Hindernisse "herumhängen" und eine starke Belastung der Schlaucheinbindung solcher Schläuche vermieden wird. Intern ist eine Hydraulikverbindung über Hydraulikrohre vorgesehen. Die Hydraulik- und Elektrikversorgung erfolgt über die Anschluß- und Verteilungseinheit 47 (siehe Figuren 1 und 2).

Im übrigen sei bemerkt, daß in Figur 4 die Kolbenstange 48 der Längszylindereinheit 36 für die Z-Richtung zu sehen ist.

Die Figur 5 zeigt eine alternative Ausführung einer Antriebseinheit A', die an der Stelle der Antriebseinheit A der Figuren 1 und 2 verwendet werden kann und die im Gegensatz zu der Antriebseinheit A nicht aus einer handelsüblichen Längszylindereinheit 36, sondern aus zwei neuartigen Längszylindereinheiten 1 aufgebaut ist, die, wie die Figur 5 zeigt, so angeordnet sind, daß ihre Verschiebungsrichtung senkrecht ist und ihre unteren Umlenkköpfe 16 mittels einer Montageplatte 49 miteinander verbunden sind, welche die Funktion der Konsole 37 der Figuren 1 bis 4 hat, so daß also auf der oberen Tischfläche dieser Montageplatte 49 die Antriebseinheiten B und C mit dem Kreuztisch K in entsprechender Weise wie auf der Konsole 37 angebracht werden können. Selbstverständlich könnte die Montageplatte 49 auch zwischen den oberen beiden Umlenkköpfen 16 vorgesehen sein, jedoch ergibt sich bei der in Figur 5 dargestellten Ausführungsform eine günstige Lage des Krafteinleitungspunkts O des Kreuztisches K, wobei in diesem vorliegenden Fall die Mitte des Kreuztisches K nicht mehr vertieft angeordnet zu werden braucht, so daß also hier für den Kreuztisch K eine ebene Platte o. dgl. verwendet werden kann. Die beiden Längszylindereinheiten 1 in Figur 5 sind an einer Basis 50 befestigt, die vorliegend eine generell U-förmige Konfiguration hat und für die Aufnahme starker Kräfte beispielsweise ein schwerer und massiver Rahmenaufbau sein kann. Im einzelnen sind gemäß Figur 5 die Führungsblöcke 15 der beiden Längszylindereinheiten 1 an den gegenüberliegenden U-Schenkeln der Basis 50 befestigt.

Es können auch mehr als zwei Längszylindereinheiten 1 parallel zueinander für je eine oder mehrere Verschiebungsrichtungen X, Y und/oder Z vorgesehen sein.

Bei Verwendung der Antriebseinheit A' gemäß Figur 5 oder einer anderen aus den beschriebenen Längszylindereinheiten 1 aufgebauten Antriebseinheit für die Z-Richtung wird gegenüber Figur 1 eine wesentlich verringerte Bauhöhe des gesamten mehraxialen Antriebselements erreicht, und die gesonderten Stützlager 41 gemäß Figuren 1 und 2 sind nicht erforderlich.

Mit einer abgestimmten Gleichlaufsteuerung kann die Ansteuerung mehrerer Längszylindereinheiten 1 mit einem Servoventil erfolgen. Ein Vorteil ist u.a. eine erhebliche Kosteneinsparung.

Insbesondere werden durch das mehraxiale Antriebselement gemäß der Erfindung folgende Vorteile erzielt:

(1) Es können an einem einzigen Punkt ohne Gelenke, ohne gegenseitige Beeinflussung und ohne aufwendige mechanische Umlenkungen beliebig viele Kräfte und Kraftrichtungen wirksam gemacht werden.

(2) Das mehraxiale Antriebselement kann sowohl hydraulisch als auch pneumatisch angetrieben werden.

(3) Der kompakte und einfache Aufbau des erfindungsgemäßen mehraxialen Antriebselements erschließt ihm Einsatzmöglichkeiten in der Prüfmaschinentechnik, in der Werkzeugmaschinentechnik, sowie bei Automatisierungsaufgaben, zum Beispiel bei Robotern, wo es ebenfalls auf schnelle präzise, mehraxiale Bewegung ankommt, sowie auf vielen anderen Gebieten der Technik.

(4) Das mehraxiale Antriebselement gemäß der Erfindung kann als schnelle, genaue, kompakte und regelbare Einheit mit Servoventilsteuerung eingesetzt und für hohe Kräfte und Wege ausgelegt werden. Ein Beispiel einer Auslegung ist ein mehraxiales Antriebselement für eine Längskraft von ± 25 kN bei 280 bar und für 100 mm Weg sowie für eine Seitenkraft von 100 kN.

(5) Das erfindungsgemäße mehraxiale Antriebselement ist einfach und preisgünstig herstellbar.

(6) Durch einen entsprechenden Aufbau können die Einzelelemente, insbesondere die Längszylindereinheiten, beliebig kombiniert werden (zum Beispiel Querkraft und Längskraft, oder Querkraft, Längskraft und Bremskraft).

(7) Durch den Einsatz der vertikalen Stützlager 41 sind keine aufwendigen Aufspann- oder Winkelelemente zur Abstützung der Längs-, Seiten- oder Bremskräfte (beispielsweise für die Prüfung von Fahrzeugachsen in den oben erwähnten Prüfeinrichtungen) mehr notwendig. Der Platzbedarf sinkt dadurch erheblich.

(8) Zur Einleitung mehrerer Bewegungsrichtungen oder Kräfte an einem Punkt entfällt der Einsatz aufwendiger elastischer Bauteile oder Gelenke. Dadurch ist kein Bruch oder starker Verschleiß vorhanden, und demzufolge sind auch keine kostenintensiven Reparaturen mehr notwendig.

(9) Die durch die geometrischen Zwangsanordnungen (d.h. einen Aufbau, der Geometrieausgleich erfordert) der bisherigen Aufbauten bedingten zeitlichen Phasenverschiebungen zwischen den Vertikal-, Längs-, Seiten- und Bremskraftzylindern entfallen völlig (beispielsweise bei einer Einrichtung zur Prüfung von Fahrzeugachsen, auf die oben hingewiesen worden ist).

(10) Der bisher notwendige geometrische Ausgleich mehrerer mechanisch gekoppelter Zylinder, also der Geometrieausgleich bzw. die Geometriekorrektur, kann ebenfalls entfallen. Die gewünschten Wege, Kräfte, Beschleunigungen etc. können direkt vorgegeben werden. Die Verwendung von Großrechneranlagen zur Signalgenerierung mit komplizierter Software ist nicht mehr notwendig. Die Simulation der tatsächlich auftretenden Belastungen (zum Beispiel bei Fahrzeugprüfungen bzw. bei Fahrzeugachsprüfungen) ist mit einfachen Mitteln vom Meßfahrzeug auf den Prüfstand übertragbar.

(11) Die hydraulische oder pneumatische Versorgung kann sowohl intern als auch extern sehr einfach gehalten sein. Starker Verschleiß oder ermüdungsbedingte Fehler (Schlaucheinbindungen) sind daher nicht mehr zu befürchten.

(12) Die Montageart oder der Montageort von Kraftmeßdosen, Weg oder Beschleunigungsanforderungen kann je nach Anwendungsfall leicht den Bedürfnissen angepaßt werden, da keine wesentliche Behinderung mehr durch den Kraftübertragungsaufbau vorliegt.

Im Gegensatz zur Erfindung sind handelsübliche mehraxiale Antriebseinrichtungen nach dem Stande der Technik aufgrund ihres komplizierten Aufbaus sehr teuer. Erforderlich ist bei diesen mehraxialen Antriebseinrichtungen nach dem Stander der Technik außerdem ein sehr großer Platzbedarf. Je nach Ausführung dieser bekannten Einrichtungen gibt es Probleme mit Lagerspiel, Verschleiß, Regeldämpfungen und Nichtlinearitäten. Auf jeden Fall ist bei allen bisher bekannten Ausführungen von mehraxialen Antriebseinrichtungen für deren Betrieb, insbesondere in Prüfeinrichtungen der eingangs erwähnten Art, eine komplizierte Prozeßrechneranlage mit hohen Hard- und Softwarekosten notwendig, um die mechanisch bedingten Unzulänglichkeiten und Fehler zu verringern (insbesondere ist ein Geometrieausgleich erforderlich). Es ist bei den bekannten mehraxialen Antriebseinrichtungen nicht möglich, die gewünschten Wege, Kräfte, Beschleunigungen etc. der jeweiligen Bewegungsachse direkt, ohne aufwendige Korrekturen vorzugeben.

**Patentansprüche**

1. Mehraxiales Antriebselement, das wenigstens zwei Antriebseinheiten (A, A', B, C) zum Erzeugen eines axialen Verschiebungsantriebs umfaßt, von denen die eine Antriebseinheit (B bzw. C) auf mindestens einem durch die andere Antriebseinheit (A, A' bzw. B) verschiebbaren Bauteil (39 bzw. 16) derart angebracht ist, daß die axialen Verschiebungsrichtungen der Antriebseinheiten (A, A', B, C) quer, insbesondere senkrecht, zueinander verlaufen, wobei wenigstens eine dieser Antriebseinheiten (A', B, C) eine pneumatische oder hydraulische Kolben-Zylinder-Einheit (1, 1a, 1b, 1c, 1d) umfaßt, in der ein Antriebskolben (2, 3) in einem Zylinder (4) hin- und herschiebbar angeordnet ist und zusammen mit letzterem einen ersten und zweiten Druckströmungsmittelraum (5, 6) begrenzt, in die und aus denen ein pneumatisches oder hydraulisches Druckströmungsmittel zum Verschieben des Antriebskolbens (2, 3) zu- und abführbar ist, dadurch **gekennzeichnet,** daß die Kolben-Zylinder-Einheit der wenigstens einen Antriebseinheit (A', B, C) eine Längszylindereinheit (1) oder mehrere, parallel zueinander angeordnete Längszylindereinheiten (1, 1a, 1b, 1c, 1d) umfaßt, wobei die Längszylindereinheit (1, 1a, 1b, 1c, 1d) einen quer zur Verschiebungsrichtung (L) des Antriebskolbens (2, 3) von außen her einwirkende Querkräfte aufnehmenden Lastkolben (13) hat, der in einer Längsführung (14) parallel zum Antriebskolben (2, 3) verschiebbar angeordnet und durch eine den Antriebskolben (2, 3) von den Querkräften entkuppelnde, jedoch in der Verschiebungsrichtung (L) des Antriebskolbens (2, 3) wirkende Druck- und/oder Zuglängskräfte auf den Lastkolben (13) übertragende Kupplung (17) mit dem Antriebskolben (2, 3) verbunden ist.

2. Mehraxiales Antriebselement nach Anspruch 1, dadurch **gekennzeichnet,** daß jede der beiden Antriebseinheiten (A',B,C) eine Längszylindereinheit (1) oder mehrere, parallel zueinander angeordnete Längszylindereinheiten (1,1a,1b,1c,1d) umfaßt, wobei die Längszylindereinheit (1,1a,1b,1c,1d) einen quer zur Verschiebungsrichtung (L) des Antriebskolbens (2,3) von außen her einwirkende Querkräfte aufnehmenden Lastkolben (13) besitzt, der in einer Längsführung (14) parallel zum Antriebskolben (2,3) verschiebbar angeordnet und durch eine den Antriebskolben (2,3) von den Querkräften entkuppelnde, jedoch in der Verschiebungsrichtung (L) des Antriebskolbens (2,3) wirkende Druck- und/oder Zuglängskräfte auf den Lastkolben (13) übertragende Kupplung (17) mit dem Antriebskolben (2,3) verbunden ist.

3. Mehraxiales Antriebselement nach Anspruch 1 oder 2, dadurch **gekennzeichnet,** daß die Längszylindereinheit (1) oder -einheiten (1,1a,1b,1c,1d) der einen axialen Antriebseinheit (C), die auf mindestens einem durch die andere axiale Antriebseinheit (B) verschiebbaren Bauteil (16) angebracht ist bzw. sind, derart auf letzterer befestigt ist, daß sich der Massenschwerpunkt der einen axialen Antriebseinheit (C) in deren mittleren Verschiebungsstellung senkrecht oder im wesentlichen senkrecht über dem Massenschwerpunkt der anderen axialen Antriebseinheit (B) in deren mittleren Verschiebungsstellung befindet.

4. Mehraxiales Antriebselement nach einem der Ansprüche 1 bis 3, dadurch **gekennzeichnet,** daß die Antriebseinheiten (A,A′,B,C) kreuzweise zueinander angeordnet sind.

5. Mehraxiales Antriebselement nach einem der Ansprüche 1 bis 4, dadurch **gekennzeichnet,** daß die Längszylindereinheit (1,1a,1b,1c,1d) zwei Kolben-Zylinder-Einheiten mit je einem parallel zum Lastkolben (13) verschiebbaren Antriebskolben (2,3) aufweist, wobei je einer der beiden Antriebskolben (2,3) mit je einem Längsende des Lastkolbens (13) über je eine den zugeordneten Antriebskolben (2,3) von den Querkräften entkuppelnde, jedoch Druck- und/oder Zuglängskräfte desselben auf den Lastkolben (13) übertragenden Kupplung (17) verbunden ist.

6. Mehraxiales Antriebselement nach Anspruch 5, dadurch **gekennzeichnet,** daß die beiden Antriebskolben (2,3) in einer gemeinsamen Zylindereinheit, insbesondere einem gemeinsamen Zylinder (4) angeordnet sind und der erste und zweite Druckströmungsmittelraum (5,6) zwischen den einander zugewandten Enden der beiden Antriebskolben (2,3) vorgesehen sind.

7. Mehraxiales Antriebselement nach Anspruch 6, dadurch **gekennzeichnet,** daß die einander zugewandten Enden der beiden Antriebskolben (2,3) durch ein Verbindungselement (11) miteinander verbunden sind, das abdichtend und in Verschiebungsrichtung (A) der Antriebskolben (2,3) verschiebbar durch wenigstens ein Trennelement (12) hindurchgeführt ist, welches den ersten und zweiten Druckströmungsmittelraum (5,6) voneinander trennt.

8. Mehraxiales Antriebselement nach Anspruch 6 oder 7, dadurch **gekennzeichnet,** daß die beiden Antriebskolben (2,3) koaxial verschiebbar in der gemeinsamen Zylindereinheit, insbesondere dem gemeinsamen Zylinder (4), angeordnet sind.

9. Mehraxiales Antriebselement nach einem der Ansprüche 5 bis 8, **gekennzeichnet** durch einen zwischen dem Antriebskolben (2,3), insbesondere dessen freiem Ende, und dem Lastkolben (13), insbesondere dessen dem freien Ende des Antriebskolbens benachbartem Ende, vorgesehenen Umlenkkopf (16), der sich quer zur Verschiebungsrichtung (A) des Antriebskolbens (2,3) und des Lastkolbens (13) erstreckt und fest am Lastkolben (13) angebracht ist, wobei die Kupplung (17) zwischen dem Umlenkkopf (16) und dem Kolben (2,3) vorgesehen ist.

10. Mehraxiales Antriebselement nach Anspruch 9, dadurch **gekennzeichnet,** daß der oder die Längszylinder (1c,1d) der einen Antriebseinheit (C) auf den Umlenkköpfen (16) des Längszylinders (1a,1b) oder der Längszylinder (1a,1b) der anderen Antriebseinheit (B) befestigt ist bzw. sind.

11. Mehraxiales Antriebselement nach Anspruch 10, dadurch **gekennzeichnet,** daß ein die beiden Umlenkköpfe (16) einer Längszylindereinheit (1,1a,1b,1c,1d) oder die Umlenkköpfe (16) mehrerer Längszylindereinheiten (1,1a,1b,1c,-1d), die zu einer Antriebseinheit (A′,B,C) gehören, verbindender Auflage- bzw. Montagetisch (49) oder Kreuztisch (K) für die Auflage bzw. Montage einer oder mehrerer weiterer Antriebseinheiten (B,C) oder für den Anschluß an ein anzutreibendes Element vorgesehen ist.

12. Mehraxiales Antriebselement nach einem der Ansprüche 1 bis 11, dadurch **gekennzeichnet,** daß drei Antriebseinheiten (A,A′,B,C) zu einem dreiaxialen Antriebselement zusammengebaut sind, dessen Achsen vorzugsweise senkrecht zueinander verlaufen.

13. Mehraxiales Antriebselement nach einem der Ansprüche 1 bis 12, dadurch **gekennzeichnet,** daß eine oder mehrere axiale Antriebseinheiten (A′,B,C) zwei parallel zueinander angeordnete Längszylindereinheiten (1,1a,1b,1c,-1d) umfaßt.

14. Mehraxiales Antriebselement nach Anspruch 13, dadurch **gekennzeichnet,** daß die eine Längszylindereinheit (1c) der einen Antriebseinheit (C) auf zwei benachbarten Umlenkköpfen (16) zweier paralleler Längszylindereinheiten (1a,1b) der anderen Antriebseinheit (B) angebracht und die andere Längszylindereinheit (1d) der einen Antriebseinheit (C) auf den beiden anderen benachbarten Umlenkköpfen (16) der Längszylindereinheiten (1a,1b) der anderen Antriebseinheit (B) angebracht ist.

15. Mehraxiales Antriebselement nach einem der Ansprüche 1 bis 14, dadurch **gekennzeichnet,** daß bei einer oder mehreren Längszylindereinheiten (1,1a,1b,1c,1d) mehrere, parallel zueinander verschiebbare Lastkolben (13) mit je einer zugehörigen Längsführung (14) vorgesehen und mit dem oder den Antriebskolben (2,3) verbunden sind.

16. Mehraxiales Antriebselement nach einem der Ansprüche 1 bis 15, dadurch **gekennzeichnet,** daß bei einer oder mehreren Längszylindereinheiten (1,1a,1b,1c,1d) der oder die Antriebskolben (2,3) und der oder die Lastkolben (13) in einer gemeinsamen Führungseinheit, insbesondere einem gemeinsamen Führungsblock (15), welche bzw. welcher den oder die Zylinder (8) und die Längsführung (14) oder Längsführungen (14) umfaßt, geführt sind.

17. Mehraxiales Antriebselement nach einem der Ansprüche 1 bis 16, dadurch **gekennzeichnet,** daß bei einer oder mehreren Längszylindereinheiten (1,1a,1b,1c,1d) die Kupplung (17) eine Kugel-Kugelkalotten-Lagerung (18,19,29) oder eine Walzen-Walzenkalotten-Lagerung ist oder umfaßt.

18. Mehraxiales Antriebselement nach einem der Ansprüche 1 bis 17, dadurch **gekennzeichnet,** daß bei einer oder mehreren Längszylindereinheiten (1,1a,1b,1c,1d) eine oder mehrere den lichten Querschnitt des oder der Zylinder (8) verkleinernde Zylindereinsatzbuchsen (31) mit angepaßtem Antriebskolben (2,3) und/oder eine oder mehrere den lichten Querschnitt der Längsführung (14) oder -führungen (14) verkleinernde Längsführungseinsatzbuchsen (32) mit angepaßtem Lastkolben (13) vorgesehen sind.

19. Mehraxiales Antriebselement nach einem der Ansprüche 1 bis 18, dadurch **gekennzeichnet,** daß bei einer oder mehreren Längszylindereinheiten (1,1a,1b,1c,1d) die Längsführung (14) des Lastkolbens (13) eine in mehrere Längsbereiche (14a,14b) unterteilte hydrostatische Lagerung oder Gleitlagerung für den Lastkolben (13) ist.

20. Mehraxiales Antriebselement nach einem der Ansprüche 1 bis 19, dadurch **gekennzeichnet,** daß bei einer oder mehreren Längszylindereinheiten (1,1a,1b,1c,1d) das Trennelement (12) eine Buchse ist, die in eine Bohrung (20) einsetzbar, insbesondere einschraubbar, ist, welche die beiden Druckströmungsmittelräume (5,6) miteinander verbindet, wobei in der Buchse oder zwischen zwei Buchsen eine Dichtung (21) vorgesehen ist.

21. Mehraxiales Antriebselement nach einem der Ansprüche 1 bis 20, dadurch **gekennzeichnet,** daß bei einer oder mehreren Längszylindereinheiten (1,1a,1b,1c,1d) das Verbindungselement (11) eine Stange ist, die an ihren Enden (22,23) vorzugsweise in die Antriebskolben (2,3) eingeschraubt ist.

22. Mehraxiales Antriebselement nach einem der Ansprüche 1 bis 21, dadurch **gekennzeichnet,** daß bei einer oder mehreren Längszylindereinheiten (1,1a,1b,1c,1d) in einer im Antriebskolben (2,3) vorgesehenen Gewindebohrung (24), in welche das Verbindungselement (11) eingeschraubt ist, eine die Einschraublänge des Verbindungselements (11) festlegende Konterschraube (25) vorgesehen ist.

23. Mehraxiales Antriebselement nach einem der Ansprüche 1 bis 22, dadurch **gekennzeichnet,** daß bei einer oder mehreren Längszylindereinheiten (1,1a,1b,1c,1d) der Lastkolben (13) einen runden, dreieckigen, quadratischen, rechteckigen, trapezförmigen, schwalbenschwanzförmigen oder vieleckigen Querschnitt hat.

## Claims

1. Multi-axis driving element that contains at least two drive units (A, A', B, C) to produce an axial displacement drive, one of the drive units (B or C) being attached to at least one component (39 or 16) that can slide through the other drive unit (A, A' or B) in such a way that the axial directions of displacement of the drive units (A, A', B, C) run transversely, particularly perpendicularly, to each other, whereby at least one of these drive units (A', B, C) includes a pneumatic or hydraulic piston/cylinder unit (1, 1a, 1b, 1c, 1d) in which a drive piston (2, 3) is arranged in a cylinder (4) so that it can slide in and out and, together with the latter, delimits a space (5, 6) for a pressure flow medium into which and out of which a pneumatic or hydraulic pressure flow medium is able to flow to displace the drive piston (2, 3), characterised in that the piston/cylinder unit of at least one drive unit (A', B, C) contains a longitudinal cylinder unit (1) or several longitudinal cylinder units (1, 1a, 1b, 1c, 1d) arranged in parallel with each other, whereby the longitudinal cylinder unit (1, 1a, 1b, 1c, 1d) has a load piston (13) which absorbs lateral forces acting externally and transversely to the direction of displacement (L) of the drive piston (2, 3), said load piston being arranged so that it can slide in a longitudinal guide (14) parallel to the drive piston (2, 3) and is connected to the drive piston (2, 3) via a coupling (17) which decouples the drive piston (2, 3) from the lateral forces, but which transmits longitudinal compression and/or tensile forces acting in the direction of displacement (L) of the drive piston (2, 3) to the load piston (13).

2. Multi-axis driving element according to claim 1, characterised in that each of the two drive units (A', B, C) contains a longitudinal cylinder unit (1) or several longitudinal cylinder units (1, 1a, 1b, 1c, 1d) arranged in parallel with each other, whereby the longitudinal cylinder unit (1, 1a, 1b, 1c, 1d) has a load piston (13) which absorbs lateral forces acting externally and transversely to the direction of displacement (L) of the drive piston (2, 3), said load piston being arranged so that it can slide in a longitudinal guide (14) parallel to the drive piston (2, 3) and is connected to the drive piston (2, 3) via a coupling (17) which decouples the drive piston (2, 3) from the lateral forces, but which transmits longitudinal compression and/or tensile forces acting in the direction of displacement (L) of the drive piston (2, 3) to the load piston (13).

3. Multi-axis driving element according to claim 1 or 2, characterised in that the longitudinal cylinder unit (1) or units (1, 1a, 1b, 1c, 1d) of the one axial drive unit (C), that is or are attached to at least one component (16) that can slide through the other axial drive unit (B), is mounted on the latter so that when the one axial drive unit (C) is in its central position of displacement its centre of mass is located vertically or essentially vertically above the centre of mass of the other axial drive unit (B) when it is in its central position of displacement.

4. Multi-axis driving element according to one of the claims 1 to 3, characterised in that the drive units (A, A', B, C) are arranged crosswise to each other.

5. Multi-axis driving element according to one of the claims 1 to 4, characterised in that the longitudinal cylinder unit (1, 1a, 1b, 1c, 1d) has two piston/cylinder units, each with a drive piston (2, 3) able to slide parallel to the load piston (13), whereby each one of the two drive pistons (2, 3) is connected to each longitudinal end of the load piston (13) via a respective coupling (17) that decouples the associated drive pistons (2, 3) from the lateral forces, but which transmits compression and/or tensile forces of the said drive pistons to the load piston (13)

6. Multi-axis driving element according to claim 5, characterised in that the two drive pistons (2, 3) are arranged in a common cylinder unit, particularly a common cylinder (4), and the first and second spaces (5, 6) for the pressure flow medium are provided between the ends of the two drive pistons which face each other.

7. Multi-axis driving element according to claim 6, characterised in that the ends of the two drive pistons (2, 3) which face each other are connected together by a connecting element (11) that is passed through at least one separating element (12) so that it is sealed and can slide in the direction of displacement (A) of the drive pistons (2, 3), said separating element separating the first and second spaces for the pressure flow medium (5, 6) from each other.

8. Multi-axis driving element according to claim 6 or 7, characterised in that the two drive pistons (2, 3) are arranged so that they can slide coaxially in the common cylinder unit, particularly the common cylinder (4).

9. Multi-axis driving element according to one of the claims 5 to 8, characterised by a reversing head (16) provided between the drive piston (2, 3), particularly its free end, and the load piston (13), particularly its end adjacent to the free end of the drive piston, said reversing head extending laterally in the direction of displacement (A) of the drive piston (2, 3) and the load piston (13) and is permanently attached to the load piston (13), whereby the coupling (17) is provided between the reversing head (16) and the piston (2, 3).

10. Multi-axis driving element according to claim 9, characterised in that the longitudinal cylinder or cylinders (1c, 1d) of the one drive unit (C) is/are attached to the reversing heads (16) of the longitudinal cylinder (1a, 1b) or longitudinal cylinders (1a, 1b) of the other drive unit (B).

11. Multi-axis driving element according to claim 10, characterised in that a support or mounting table (49) or cross table (K) connecting the two reversing heads (16) of one longitudinal cylinder unit (1, 1a, 1b, 1c, 1d) or the reversing heads (16) of several longitudinal cylinder units (1, 1a, 1b, 1c, 1d) which belong to one drive unit (A', B, C) is provided for the support or mounting of one or more further drive units (B, C) or for connection to an element to be driven.

**12.** Multi-axis driving element according to one of the claims 1 to 11, characterised in that three drive units (A, A', B, C) are assembled into one three-axis driving element whose axes preferably run perpendicularly to each other.

**13.** Multi-axis driving element according to one of the claims 1 to 12, characterised in that one or several axial drive units (A', B, C) contain two longitudinal cylinder units (1, 1a, 1b, 1c, 1d) arranged parallel to each other.

**14.** Multi-axis driving element according to claim 13, characterised in that the one longitudinal cylinder unit (1c) of the one drive unit (C) is attached to two adjacent reversing heads (16) of two parallel longitudinal cylinder units (1a, 1b) of the other drive unit (B) and the other longitudinal cylinder unit (1d) of the one drive unit (C) is attached to the other two adjacent reversing heads (16) of the longitudinal cylinder units (1a, 1b) of the other drive unit (B).

**15.** Multi-axis driving element according to one of the claims 1 to 14, characterised in that in one or several longitudinal cylinder units (1, 1a, 1b, 1c, 1d), several sliding load pistons (13) in parallel with each other, each with an associated longitudinal guide (14), are provided and are connected to the drive piston or pistons (2, 3).

**16.** Multi-axis driving element according to one of the claims 1 to 15, characterised in that in one or several longitudinal cylinder units (1, 1a, 1b, 1c, 1d) the drive piston or pistons (2, 3) and the load piston or pistons (13) are guided in a common guide unit, particularly a common guide block (15), which contains the cylinder or cylinders (8) and the longitudinal guide (14) or longitudinal guides (14).

**17.** Multi-axis driving element according to one of the claims 1 to 16, characterised in that in one or several longitudinal cylinder units (1, 1a, 1b, 1c, 1d) the coupling (17) is or contains a ball-and-cup bearing (18, 19, 29) or a roller-and-cup bearing.

**18.** Multi-axis driving element according to one of the claims 1 to 17, characterised in that one or several longitudinal cylinder units (1, 1a, 1b, 1c, 1d) are provided with one or several cylindrical bush inserts (31) with matching drive piston (2, 3), which reduce the clear cross-section of the cylinder or cylinders (8) and/or one or several longitudinal guide bush inserts (32) with matching load piston (13), which reduce the clear cross-section of the longitudinal guide (14) or guides (14).

**19.** Multi-axis driving element according to one of the claims 1 to 18, characterised in that in one or several longitudinal cylinder units (1, 1a, 1b, 1c, 1d) the longitudinal guide (14) of the load piston (13) is a hydrostatic or sliding bearing for the load piston (13), that is divided into several longitudinal sections (14a, 14b).

**20.** Multi-axis driving element according to one of the claims 1 to 19, characterised in that in one or several longitudinal cylinder units (1, 1a, 1b, 1c, 1d) the separating element (12) is a bush that can be inserted, particularly screwed, into a hole (20), which connects the two spaces for the pressure medium (5, 6) together, a seal (21) being provided in the bush or between two bushes.

**21.** Multi-axis driving element according to one of the claims 1 to 20, characterised in that in one or several longitudinal cylinder units (1, 1a, 1b, 1c, 1d) the connecting element (11) is a rod that is screwed in at its ends (22, 23), preferably into the drive pistons (2, 3).

**22.** Multi-axis driving element according to one of the claims 1 to 21 characterised in that in one or several longitudinal cylinder units (1, 1a, 1b, 1c, 1d) a lock-screw (25) which determines the thread reach of the connecting element (11), is provided in a tapped hole (24) into which the connecting element (11) is screwed.

**23.** Multi-axis driving element according to one of the claims 1 to 22, characterised in that in one or several longitudinal cylinder units (1, 1a, 1b, 1c, 1d) the load piston (13) has a circular, triangular, square, rectangular, trapezoidal, dovetail-shaped or polygonal cross-section.

**Revendications**

**1.** Elément d'entraînement multiaxial, qui comprend au moins deux unités d'entraînement (A, A', B, C) pour produire un entraînement en translation axiale, une première unité d'entraînement (B ou C) étant disposée sur au moins un élément constructif (39 ou 16), qui peut être déplacé en translation par l'autre unité d'entraînement (A, A' ou B), de telle sorte que les directions de translation axiale des unités d'entraînement (A, A', B, C) s'étendent transversalement et notamment perpendiculairement entre elles, au moins une de ces unités d'entraînement (A', B, C) comprenant un ensemble cylindre-piston pneumatique ou hydraulique (1, 1a, 1b, 1c, 1d), dans lequel un piston d'entraînement (2, 3) est mobile en va-et-vient dans un cylindre (4) et délimite, conjointement avec ce dernier, une première et une seconde chambres de fluide sous pression (5, 6) dans lesquelles ou desquelles un fluide sous pression pneumatique ou hydraulique peut être introduit ou évacué afin de déplacer le piston d'entraînement (2, 3), **caractérisé** en ce que l'ensemble cylindre-piston d'au moins une unité d'entraînement (A', B, C) comprend une unité cylindrique longitudinale (1) ou plusieurs unités cylindriques longitudinales mutuellement parallèles (1, 1a, 1b, 1c, 1d), l'unité cylindrique longitudinale (1, 1a, 1b, 1c, 1d) possédant un piston de charge (13), qui reçoit des forces transversales agissant de l'extérieur transversalement à la direction de translation (L) du piston d'entraînement (2, 3), qui est mobile en translation dans un guidage longitudinal (14) parallèlement au piston d'entraînement (2, 3), et qui est relié au piston d'entraînement (2, 3) par un accouplement (17) qui désaccouple le piston d'entraînement (2, 3) des forces transversales, mais transmet au piston de charge (13) des forces longitudinales de compression et/ou de traction agissant dans la direction de translation (L) du piston d'entraînement (2, 3).

2. Elément d'entraînement multiaxial selon la revendication 1, **caractérisé** en ce que chacune des deux unités d'entraînement (A', B, C) comprend une unité cylindrique longitudinale (1) ou plusieurs unités cylindriques longitudinales mutuellement parallèles (1, 1a, 1b, 1c, 1d), l'unité cylindrique longitudinale (1, 1a, 1b, 1c, 1d) possédant un piston de charge (13), qui reçoit des forces transversales agissant de l'extérieur perpendiculairement à la direction de translation (L) du piston d'entraînement (2, 3), qui est mobile en translation parallèlement au piston d'entraînement (2, 3) dans un guidage longitudinal (14), et qui est relié au piston d'entraînement (2, 3) par un accouplement (17) qui désaccouple le piston d'entraînement (2, 3) des forces transversales, mais transmet au piston de charge (13) des forces longitudinales de compression et/ou de traction agissant dans la direction de translation (L) du piston d'entraînement (2, 3).

3. Elément d'entraînement multiaxial selon la revendication 1 ou 2, **caractérisé** en ce que l'unité cylindrique longitudinale (1) ou les unités cylindriques longitudinales (1 1a, 1b, 1c, 1d) de la première unité d'entraînement axial (C), qui est ou sont disposées sur au moins un élément constructif (16) pouvant être déplacé en translation par l'autre unité d'entraînement axial (B), est fixée sur cet élément de telle sorte que le centre de gravité de la première unité d'entraînement axial (C), dans sa position médiane de translation, se trouve perpendiculairement ou sensiblement perpendiculairement au-dessus du centre de gravité de l'autre unité d'entraînement axial (B) dans sa position médiane de translation.

4. Elément d'entraînement multiaxial selon l'une des revendications 1 à 3, **caractérisé** en ce que les unités d'entraînement (A, A', B, C) sont disposées en croix les unes par rapport aux autres.

5. Elément d'entraînement multiaxial selon l'une des revendications 1 à 4, **caractérisé** en ce que l'unité cylindrique longitudinale (1, 1a, 1b, 1c, 1d) comprend deux ensembles cylindre-piston possédant chacune un piston d'entraînement (2, 3) mobile en translation parallèlement au piston de charge (13), chacun des deux pistons d'entraînement (2, 3) étant relié à une extrémité longitudinale respective du piston de charge (13) par l'intermédiaire d'un accouplement respectif (17) qui désaccouple le piston d'entraînement associé (2, 3) des forces transversales, mais transmet les forces longitudinales de compression et/ou de traction de ce dernier au piston de charge (13).

6. Elément d'entraînement multiaxial selon la revendication 5, **caractérisé** en ce que les deux pistons d'entraînement (2, 3) sont disposés dans une unité cylindrique commune, notamment dans un cylindre commun (4), et les première et seconde chambres de fluide sous pression (5, 6) sont prévues entre les extrémités en vis-à-vis des deux pistons d'entraînement (2, 3).

7. Elément d'entraînement multiaxial selon la revendication 6, **caractérisé** en ce que les extrémités en vis-à-vis des deux pistons d'entraînement (2, 3) sont mutuellement reliées par un élément de liaison (11) qui traverse, en étanchéité et avec possibilité de translation dans la direction de translation (L) des pistons d'entraînement (2, 3), au moins un élément de séparation (12) qui sépare l'une de l'autre les première et seconde chambres de fluide sous pression (5, 6).

8. Elément d'entraînement multiaxial selon la revendication 6 ou 7, **caractérisé** en ce que les deux pistons d'entraînement (2, 8) sont disposés en translation coaxiale dans l'unité cylindrique commune, notamment dans le cylindre commun (4).

9. Elément d'entraînement multiaxial selon l'une des revendications 5 à 8, **caractérisé** par une tête de renvoi (16), qui est prévue entre le piston d'entraînement (2, 3), notamment son extrémité libre, et le piston de charge (13), notamment son extrémité voisine de l'extrémité libre du piston d'entraînement, qui s'étend transversalement à la direction de translation (L) du piston d'entraînement (2, 3) et du piston de charge (13), et qui est disposée fixement sur le piston de charge (13), l'accouplement (17) étant prévu entre la tête de renvoi et le piston (2, 3).

10. Elément d'entraînement multiaxial selon la revendication 9, **caractérisé** en ce que le ou les cylindres longitudinaux (1c, 1d) de la première unité d'entraînement (C) est ou sont fixés sur les têtes de renvoi (16) du cylindre longitudinal (1a, 1b) ou des cylindres longitudinaux (1a, 1b) de l'autre unité d'entraînement (B).

11. Elément d'entraînement multiaxial selon la revendication 10, **caractérisé** en ce qu'est prévue, pour le support ou le montage d'une ou plusieurs unités d'entraînement supplémentaires (B, C), ou pour le raccordement à un élément à entraîner, une table de support ou de montage (49) ou une table composée (K), qui relie les deux têtes de renvoi (16) d'une unité cylindrique longitudinale (1, 1a, 1b, 1c, 1d) ou les têtes de renvoi (16) de plusieurs unités cylindriques longitudinales (1, 1a, 1b, 1c, 1d) qui font partie d'une unité d'entraînement (A', B, C).

12. Elément d'entraînement multiaxial selon l'une des revendications 1 à 11, **caractérisé** en ce que trois unités d'entraînement (A, A', B, C) sont réunies en un élément d'entraînement triaxial, dont les axes sont de préférence mutuellement perpendiculaires.

13. Elément d'entraînement multiaxial selon l'une des revendications 1 à 12, **caractérisé** en ce qu'une ou plusieurs unités d'entraînement axial (A', B, C) comprend deux unités cylindriques longitudinales (1, 1a, 1b, 1c, 1d) mutuellement parallèles.

14. Elément d'entraînement multiaxial selon la revendication 13, **caractérisé** en ce que la première unité cylindrique longitudinale (1c) de la première unité d'entraînement (C) est disposée sur deux têtes de renvoi voisines (16) de deux unités cylindriques longitudinales parallèles (1a, 1b) de l'autre unité d'entraînement (B), et l'autre unité cylindrique longitudinale (1d) de la première unité d'entraînement (C) est disposée sur les deux autres têtes de renvoi voisines (16) des unités cylindriques longitudinales (1a, 1b) de l'autre unité d'entraînement (B).

15. Elément d'entraînement multiaxial selon l'une des revendications 1 à 14, **caractérisé** en ce que, pour une ou plusieurs unités cylindriques longitudinales (1, 1a, 1b, 1c, 1d), il est prévu plusieurs pistons de charge (13) mobiles en translation parallèlement entre eux, qui sont chacun dotés d'un guidage longitudinal associé (14) et qui sont reliés au ou aux pistons d'entraînement (2, 3).

16. Elément d'entraînement multiaxial selon l'une des revendications 1 à 15, **caractérisé** en ce que, pour une ou plusieurs unités cylindriques longitudinales (1, 1a, 1b, 1c, 1d), le ou les pistons d'entraînement (2, 3) et le ou les pistons de charge (13) sont guidés dans un ensemble de guidage commun, notamment dans un bloc de guidage commun (15), qui comprend le ou les cylindres (4) et le guidage longitudinal (14) ou les guidages longitudinaux (14).

17. Elément d'entraînement multiaxial selon l'une des revendications 1 à 16, **caractérisé** en ce que, pour une ou plusieurs unités cylindriques longitudinales (1, 1a, 1b, 1c, 1d), l'accouplement (17) est ou comprend un palier à boule et calotte sphérique (18, 19, 29) un palier à cylindre et calotte cylindrique.

18. Elément d'entraînement multiaxial selon l'une des revendications 1 à 17, **caractérisé** en ce que, pour une ou plusieurs unités cylindriques longitudinales (1, 1a, 1b, 1c, 1d), il est prévu une ou plusieurs douilles rapportées de cylindre (31) rétrécissant la section intérieure du ou des cylindres (4), avec un piston d'entraînement (2, 3) adapté, et/ou une ou plusieurs douilles rapportées de guidage longitudinal (32) rétrécissant la section intérieure du guidage longitudinal (14) ou des guidages longitudinaux (14), avec un piston de charge (13) adapté.

19. Elément d'entraînement multiaxial selon l'une des revendications 1 à 18, **caractérisé** en ce que, pour une ou plusieurs unités cylindriques longitudinales (1, 1a, 1b, 1c, 1d), le guidage longitudinal (14) du piston de charge (13) est un palier hydrostatique ou un palier lisse, destiné au piston de charge (13) et divisé en plusieurs secteurs longitudinales (14a, 14b).

20. Elément d'entraînement multiaxial selon l'une des revendications 1 à 19, **caractérisé** en ce que, pour une ou plusieurs unités cylindriques longitudinales (1, 1a, 1b, 1c, 1d), l'élément de séparation (12) est une douille qui peut être insérée, notamment vissée, dans un perçage (20) reliant entre elles les deux chambres de fluide sous pression (5, 6), une garniture d'étanchéité (21) étant prévue dans la douille ou entre deux douilles.

21. Elément d'entraînement multiaxial selon l'une des revendications 1 à 20, **caractérisé** en ce que, pour une ou plusieurs unités cylindriques longitudinales (1, 1a, 1b, 1c, 1d), l'élément de liaison (11) est une tige qui est vissée à ses extrémités (22, 23) dans les pistons d'entraînement (2, 3) de préférence.

22. Elément d'entraînement multiaxial selon l'une des revendications 1 à 21, **caractérisé** en ce que, pour une ou plusieurs unités cylindriques longitudinales (1, 1a, 1b, 1c, 1d), il est prévu, dans un perçage fileté (24) prévu dans le piston d'entraînement (2, 3) et dans lequel est vissé l'élément de liaison (11), un contre-écrou (25) qui fixe la longueur vissée de l'élément de liaison (11).

23. Elément d'entraînement multiaxial selon l'une des revendications 1 à 22, **caractérisé** en ce que, pour une ou plusieurs unités cylindriques longitudinales (1, 1a, 1b, 1c, 1d), le piston de charge (13) possède une section ronde, triangulaire, carrée, rectangulaire, trapézoïdale, en queue d'aronde ou polygonale.

FIG.1

FIG.2

FIG.3

FIG. 4

EP 0 283 657 B1

FIG.5

FIG.6

FIG.7

EP 0 283 657 B1

FIG.8

FIG.9

EP 0 283 657 B1

FIG.10

EP 0 283 657 B1

FIG. 11

EP 0 283 657 B1

FIG.12

FIG.13

FIG.14

FIG.15

FIG.16

FIG.17

EP 0 283 657 B1

FIG.19    FIG.20    FIG.21    FIG.22    FIG.23

FIG.18

EP 0 283 657 B1

FIG. 24

FIG.25

FIG.26

EP 0 283 657 B1